# EUROPEAN PATENT APPLICATION

(11) **EP 4 477 339 A1**
(43) Date of publication of application: **18.12.2024**
(21) Application number: 24165467.2
(22) Date of filing: 22.03.2024
(51) Int. Cl.: B22F 10/25, B22F 10/32, B22F 10/38, B22F 10/50, B23K 9/04, B23K 9/16, B23K 9/23, B23K 9/32, B23K 15/00, B23K 15/06, B23K 15/10, B23K 26/00, B23K 26/08, B23K 26/12, B23K 26/342, B33Y 10/00, B33Y 30/00, B33Y 50/02, C22C 1/04, C22C 33/02

(54) **METHODS FOR HARDENING SELECT PORTIONS OF METAL ARTICLES, ADDITIVE MANUFACTURING SYSTEMS ASSOCIATED THEREWITH, AND METAL ARTICLES**

(30) Priority: 13.06.2023 US 202318333710
(71) Applicant: The Boeing Company, Arlington, VA 22202 (US)
(72) Inventor: Weires, Dale J., Arlington VA, 22202 (US); Venezia, Jonathan, Arlington VA, 22202 (US); Kinmonth, Richard K., Arlington VA, 22202 (US); Holder, Scott M., Arlington VA, 22202 (US)
(74) Representative: Witte, Weller & Partner Patentanwälte mbB

(57) **Abstract**

A method for hardening select portions of a metal article includes establishing a nonreactive atmosphere within a build chamber of an additive manufacturing system, melting a metal material using an energy source to deposit molten material in layers to build the metal article and establishing a reactive atmosphere within the build chamber that causes a chemical reaction to harden a portion of multiple select layers. An additive manufacturing system for hardening select portions of a metal article includes a build chamber, a material handling assembly, a substrate, an energy source assembly, a translational assembly and a system control assembly. A metal article includes layers of a metal material deposited via an additive manufacturing process. A portion of select layers being hardened via a chemical reaction caused by a reactive atmosphere established during periods of the additive manufacturing process.

## Description

### FIELD

The present disclosure relates generally to hardening select portions of metal articles using additive manufacturing processes, including hardening precise interior locations of the metal article. The disclosure also relates to case-hardening precise surface locations of the metal article and to providing precise hardened depths limited only by the size of the metal article. Various techniques are also contemplated for switching between a reactive atmosphere for hardening portions of the metal article and a non-reactive atmosphere during which portions of the metal article are not hardened. Additionally, various techniques for controlling material handling, energy sources, reactant gases and non-reactant gases are also contemplated.

### BACKGROUND

Current case hardening methods that modify surface composition require heat treating equipment and considerable pre- and post-conditioning of the components. Titanium alloys do not currently have effective case hardening processes developed to allow the replacement of steels in many product applications. The existing case hardening technologies for titanium have limitations related to surface hardened case depths and locations of case hardening on components. Existing surface hardening technologies are furnace-based surface hardening processes that require long durations in furnaces at high temperatures, which may create undesirable grain growth in the alloy and risks of part distortion due to long exposures at process temperatures.

Current additive manufacturing technologies do not include gas control systems to precisely define the hardening gas composition at the melt pool. Current equipment does not allow for partial pressures of multiple gases in build chambers. Therefore, existing equipment does not allow for a reliable hardening approach.

Accordingly, those skilled in the art continue with research and development efforts to improve techniques for precise hardening of metal articles during additive manufacturing processes.

### SUMMARY

Disclosed are examples of methods for hardening select portions of metal articles, additive manufacturing systems for hardening select portions of metal articles and metal articles. For example, the metal articles with select portions hardened may be built in their entirety using additive manufacturing or an existing metal article manufactured using other techniques may have hardened material selectively added using additive manufacturing. The following is a non-exhaustive list of examples, which may or may not be claimed, of the subject matter according to the present disclosure.

In an example, the disclosed method for hardening select portions of a metal article includes: (1) establishing a non-reactive atmosphere within a build chamber of an additive manufacturing system; (2) melting a metal material using an energy source to deposit molten material in a plurality of layers to build the metal article in conjunction with controlling translational movement of at least one of the metal article and the energy source based on predetermined locations for deposition of the molten material; and (3) selectively establishing a reactive atmosphere within the build chamber that causes a chemical reaction to harden at least one select portion of each layer in multiple select layers of the plurality of layers in conjunction with the melting and subsequent solidification of the molten material.

In an example, the disclosed additive manufacturing system for hardening select portions of a metal article includes a build chamber, a material handling assembly, a substrate , an energy source assembly, a translational assembly and a system control assembly. The build chamber configured to provide a controlled environment for additive manufacturing of the metal article. The material handling assembly configured to feed a metal material inside the build chamber in conjunction with an additive manufacturing process. The substrate configured to at least temporarily retain the metal article during the additive manufacturing process. The energy source assembly is configured to melt the metal material using an energy source to deposit molten material in a plurality of layers to build the metal article on the substrate. The translational assembly configured to provide translational movement of at least one of the substrate and the energy source assembly based on predetermined locations for deposition of the molten material in conjunction with the additive manufacturing process. The system control assembly in operative communication with the material handling assembly, the energy source assembly and the translational assembly. The system control assembly configured to control establishment of a non-reactive atmosphere within the build chamber, configured to control feeding of the metal material by the material handling assembly, configured to control melting of the metal material by the energy source in conjunction with controlling the translational assembly and configured to control selective establishment of a reactive atmosphere within the build chamber to cause a chemical reaction to harden at least one select portion of each layer in multiple select layers of the plurality of layers in conjunction with the melting and subsequent solidification of the molten material.

In an example, the disclosed metal article includes a plurality of layers of a metal material deposited in layers via an additive manufacturing process. At least one select portion of each layer in multiple select layers of the plurality of layers being hardened via a chemical reaction caused by a reactive atmosphere selectively established during select periods of the additive manufacturing process. Remaining portions of the multiple select layers and remaining layers of the plurality of layers were deposited in remaining periods of the additive manufacturing process in which a non-reactive atmosphere was established.

Other examples of the disclosed methods for hardening select portions of metal articles, additive manufacturing systems for hardening select portions of metal articles and metal articles will become apparent from the following detailed description, the accompanying drawings and the appended claims.

### BRIEF DESCRIPTION OF THE DRAWINGS

Fig. 1 is a flow diagram of an example of a method for hardening select portions of a metal article;
Fig. 2 is a functional layered view an example of a metal article;
Fig. 3, in combination with Fig. 1, is a flow diagram of another example of a method for hardening select portions of a metal article;
Fig. 4, in combination with Figs. 1 and 3, is a flow diagram of yet another example of a method for hardening select portions of a metal article;
Fig. 5, in combination with Fig. 1, is a flow diagram of still another example of a method for hardening select portions of a metal article;
Fig. 6, in combination with Fig. 1, is a flow diagram of still yet another example of a method for hardening select portions of a metal article;
Fig. 7, in combination with Figs. 1 and 6, is a flow diagram of another example of a method for hardening select portions of a metal article;
Fig. 8, in combination with Figs. 1, 4 and 6, is a flow diagram of yet another example of a method for hardening select portions of a metal article;
Fig. 9, in combination with Figs. 1 and 4, is a flow diagram of still another example of a method for hardening select portions of a metal article;
Fig. 10, in combination with Fig. 1, is a flow diagram of still yet another example of a method for hardening select portions of a metal article;
Fig. 11, in combination with Fig. 1, is a flow diagram of another example of a method for hardening select portions of a metal article;
Fig. 12 is a functional block diagrams of an example of an additive manufacturing system for hardening select portions of a metal article;
Fig. 13 is a functional block diagram of an example of a gas manifold assembly for the additive manufacturing system of Fig. 12;
Fig. 14 is a functional block diagram of an example of a first configuration of the gas manifold assembly of Fig. 13;
Fig. 15 is a functional block diagram of an example of a second configuration of the gas manifold assembly of Fig. 13;
Fig. 16 is a functional block diagram of an example of a third configuration of the gas manifold assembly of Fig. 13;
Fig. 17 is a functional block diagram of an example of a fourth configuration of the gas manifold assembly of Fig. 13;
Fig. 18 is a functional block diagram of an example of a fifth configuration of the gas manifold assembly of Fig. 13;
Fig. 19 is a functional block diagram of an example of a build chamber for the additive manufacturing system of Fig. 12;
Fig. 20 is a block diagram of aircraft production and service methodology; and
Fig. 21 is a schematic illustration of an aircraft.

### DETAILED DESCRIPTION

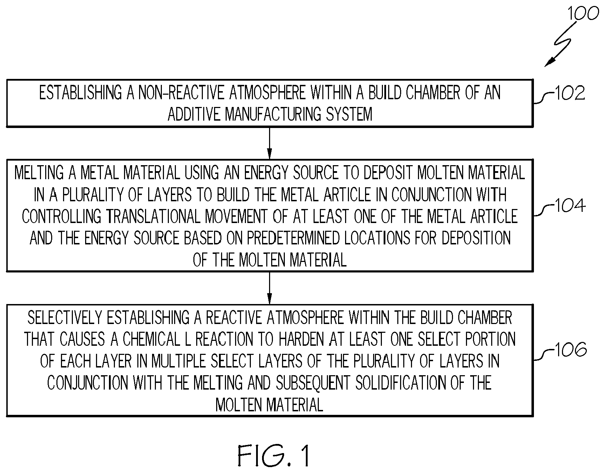

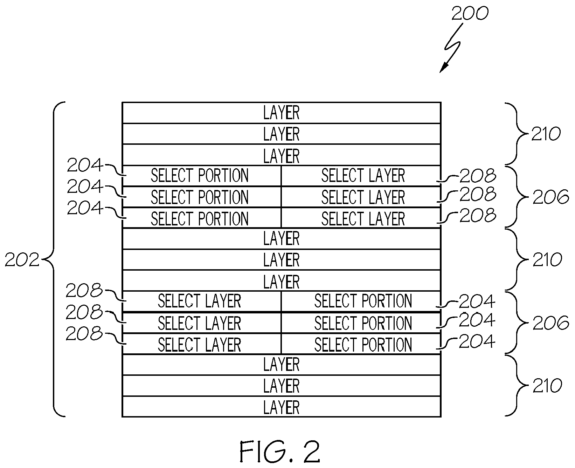

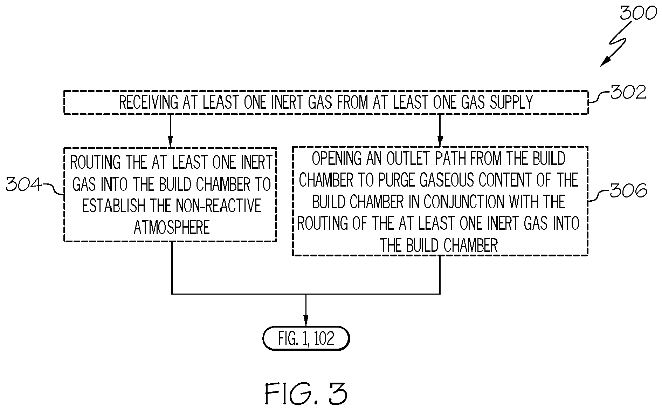

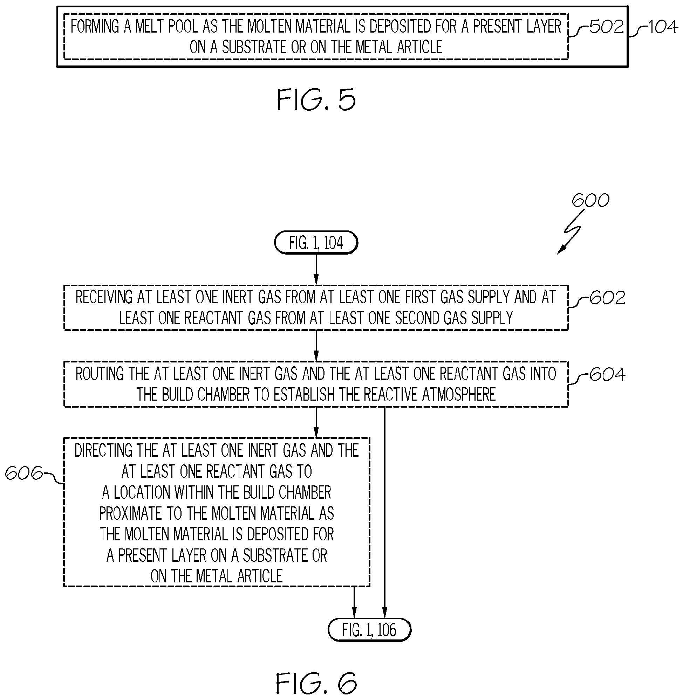

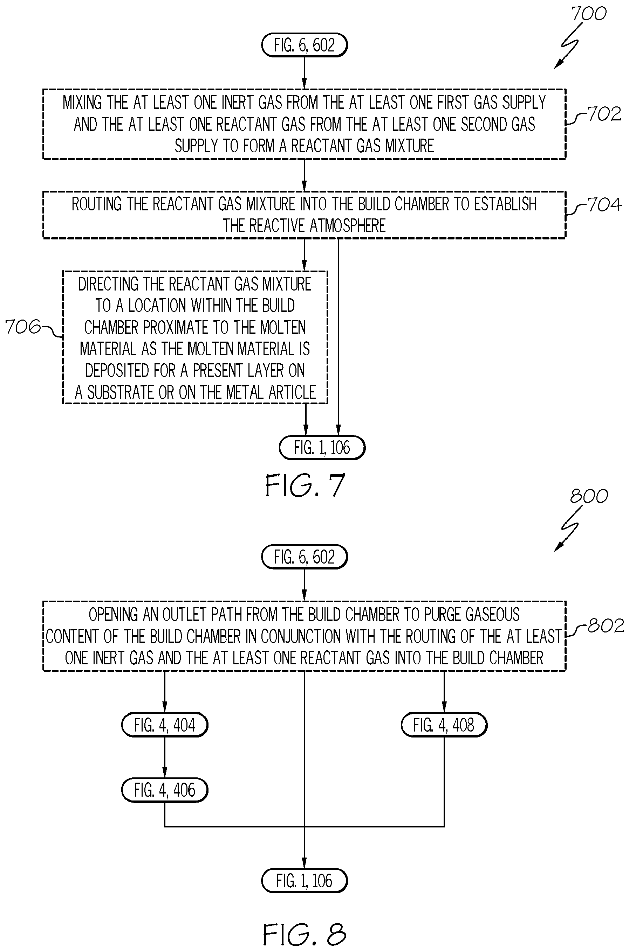

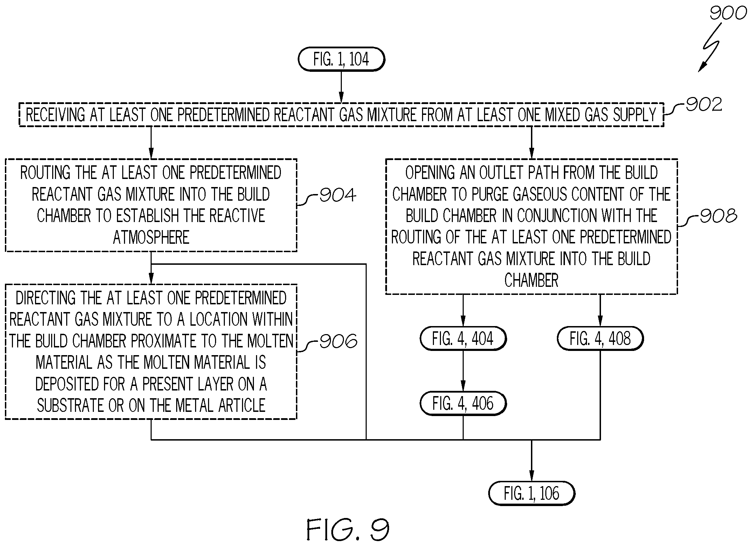

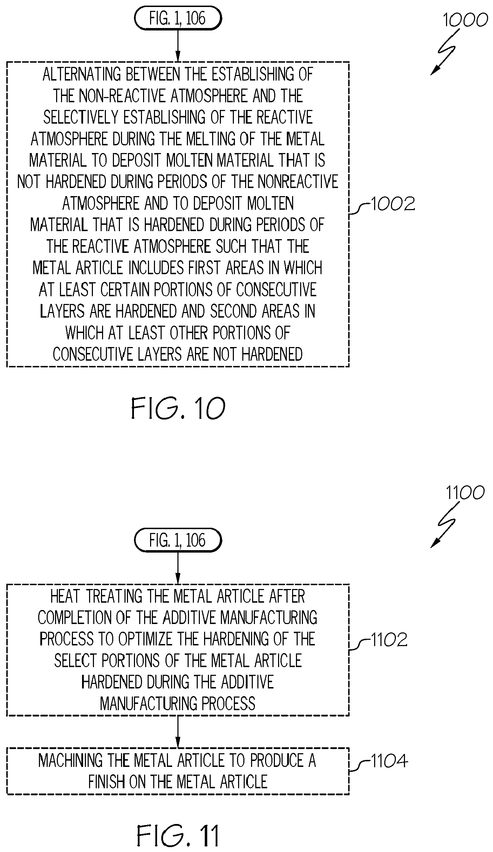

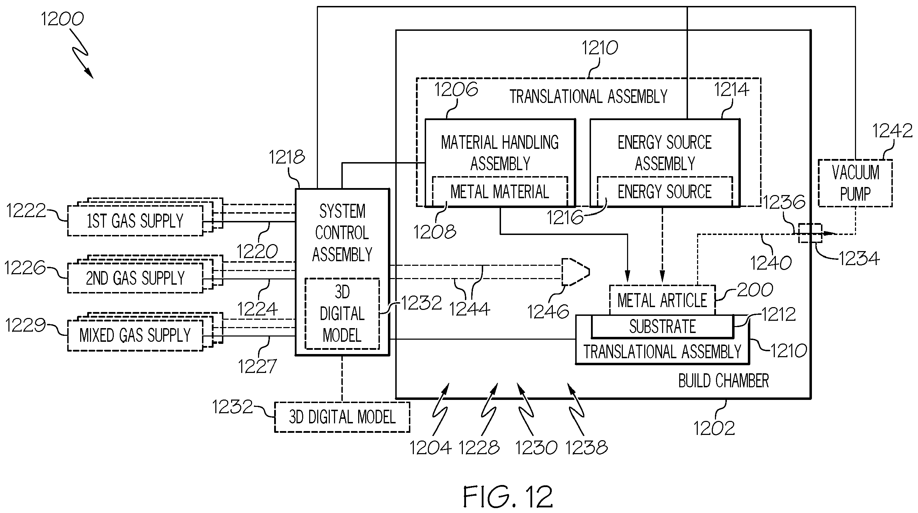

Referring generally to Figs. 1-12, by way of examples, the present disclosure is directed to methods 100, 300, 400, 600, 700, 800, 900, 1000, 1100 for hardening select portions of a metal article 200. Fig. 1 discloses an example of the method 100. Fig. 2 discloses an example of a metal article 200. Figs. 1 and 3 disclose an example of the method 300. Figs. 1, 3 and 4 disclose an example of the method 400. Fig. 5 discloses an example of forming a melt pool in relation to method 100. Figs. 1 and 6 disclose an example of the method 600. Figs. 1, 6 and 7 disclose an example of the method 700. Figs. 1, 4, 6 and 8 disclose an example of the method 800. Figs. 1, 4 and 9 disclose an example of the method 900. Figs. 1 and 10 disclose an example of the method 1000. Figs. 1 and 11 disclose an example of the method 1100. Fig. 12 discloses various examples of an additive manufacturing system 1200.

With reference again to Figs. 1, 2 and 12, in one or more examples, a method 100 for hardening select portions of a metal article 200 includes establishing 102 a non-reactive atmosphere 1228 within a build chamber 1202 of an additive manufacturing system 1200. At 104, a metal material 1208 is melted using an energy source 1216 to deposit molten material in a plurality of layers 202 to build the metal article 200 in conjunction with controlling translational movement of at least one of the metal article 200 and the energy source 1216 based on predetermined locations for deposition of the molten material. At 106, a reactive atmosphere 1230 is selectively established within the build chamber 1202 that causes a chemical reaction to harden at least one select portion 204 of each layer in multiple select layers 206 of the plurality of layers 202 in conjunction with the melting 104 and subsequent solidification of the molten material. For example, the metal articles with select portions hardened may be built in their entirety using additive manufacturing or an existing metal article manufactured using other techniques may have hardened material selectively added using additive manufacturing. In other examples, a vacuum may be applied initially to establish a suitable environment.

In another example of the method 100, the non-reactive atmosphere 1228 includes at least one inert gas 1220. In a further example, the at least one inert gas 1220 includes argon, helium, neon, nitrogen, or any other suitable inert gas in any suitable combination. Nitrogen, for example, can be used as a nonreactive or inert gas for certain metal materials. However, nitrogen may be a reactant gas for other metal materials, such as titanium. In yet another example of the method 100, in relation to the additive manufacturing process, the metal material 1208 includes a metal powder, a metal wire or any other suitable metal material in any suitable combination. In still another example of the method 100, the metal material 1208 includes titanium, a titanium alloy, a steel, a corrosion resistant steel, a precipitation hardened corrosion resistant steel, a maraging steel, a ferrous steel alloy or any other suitable metal material in any suitable combination. In still yet another example of the method 100, the energy source 1216 includes at least one laser beam, at least one electron beam, at least one plasma arc or any other suitable energy source in any suitable combination.

In various examples, the depth of a given layer of the plurality of layers 202 deposited during the additive manufacturing process ranges between about 0.0001 inches to about 0.001 inches, about 0.001 inches to about 0.002 inches, about 0.002 inches to about 0.004 inches, about 0.004 inches to about 0.010 inches, about 0.010 inches to about 0.020 inches or any other suitable depth range for the additive manufacturing process. The minimum depth of a given layer is based on a minimum deposited thickness. The deposited thickness may be based on at least one of metal material feedstock size and energy provided to create the melt pool. For example, an additive manufacturing energy source could be used for "smoothing" and, using the reactive atmosphere, a very thin hardened layer could be deposited on the metal article. In various other examples, the reactive atmosphere 1230 may include a mixture in which the reactant gas ranges from about 0.1 percent to about 50 percent, from about 0.2 percent to about 40 percent, from about 0.5 percent to about 30 percent, from about 0.8 percent to about 20 percent, from about 1.0 percent to about 10 percent or any other suitable reactant gas percentage. For example, where a higher reactant gas percentage (e.g., higher than 50 percent) is suitable for a given operation, higher percentages are contemplated for the mixture.

In another example of the method 100, the translational movement of the metal article 200, the translation movement of the energy source 1216, operation of the energy source 1216 or any other suitable parameter in any suitable combination is controlled to manage the chemical reaction that hardens the at least one select portion 204 of the multiple select layers 206 of the metal article 200. In a further example, the at least one parameter of the energy source 1216 and the translational movement of the metal article 200 and/or the energy source 1216 includes an energy source dwell time for select predetermined locations relating to hardening for the at least one select portion 204 of each layer in the multiple select layers 206 of the metal article 200, a laser deposition dwell time associated with the energy source 1216, a plasma arc dwell time associated with the energy source (1216), an electron beam dwell time associated with the energy source 1216 or any other suitable parameter in any suitable combination. Control of the translational movement, operation of the energy source and the corresponding parameters may be based on a three-dimensional digital model 1232 of the metal article 200.

In yet another example of the method 100, the translational movement of the metal article 200 and/or the energy source 1216 includes control of linear movement in at least one of an X-axis, a Y-axis and a Z-axis. In a further example, the translational movement of the metal article 200 and/or the energy source 1216 includes control of rotational movement in reference to at least one of the X-axis, the Y-axis and the Z-axis. In another further example, the translational movement of the metal article 200 and/or the energy source 1216 includes control of angular movement in reference to at least one of the X-axis, the Y-axis and the Z-axis. In still another example of the method 100, the predetermined locations for deposition of the molten material are based on a three-dimensional digital model 1232 of the metal article 200.

In still yet another example of the method 100, the reactive atmosphere 1230 includes a predetermined reactant gas mixture 1227 of at least one inert gas 1220 and at least one reactant gas 1224. In a further example, the chemical reaction includes nitriding. In an even further example, the at least one reactant gas 1224 includes a nitrogen gas, a nitrogen-based gas, an ammonia gas or any other suitable reactant gas in any suitable combination. In another further example, the chemical reaction includes carburizing. In an even further example, the at least one reactant gas 1224 includes a carbon-based gas, an acetylene gas, a propane gas, a butane gas, a methane gas, a carbon monoxide gas or any other suitable reactant gas in any suitable combination. When reactive gases or the by-products of chemical reactions create hazardous gas mixtures, the process will be managed by at least one of the use of vacuum, partial pressure, inert gas purging and gas safety control systems. In another example of the method 100, each select portion 204 of the metal article 200 that is hardened is based on corresponding locations in a three-dimensional digital model 1232 of the metal article 200 that are designated for hardening.

In yet another example of the method 100, the at least one select portion 204 of each layer in multiple select layers 206 of the metal article 200 that are hardened include one or more areas in which portions of consecutive layers are hardened. In a further example, the portions of consecutive layers that are hardened include at least one portion with a hardened depth that ranges from about 0.0001 inches to a depth through the metal article 200, about 0.002 inches to a depth through the metal article 200, about 0.004 inches to a depth through the metal article 200, about 0.006 inches to a depth through the metal article 200, about 0.008 inches to a depth through the metal article 200, about 0.010 inches to a depth through the metal article 200, about 0.020 inches to a depth through the metal article 200, about 0.030 inches to a depth through the metal article 200, about 0.040 inches to a depth through the metal article 200 or any other suitable range of hardened depth. In another further example, the one or more areas include at least one area at an interior of the metal article 200 that does not extend to an exterior surface of the metal article 200. In yet another further example, the one or more areas include at least one area that extends from a first layer of the metal article 200 to consecutive layers. As described above, the metal article 200 can be built with intermittent hardened internal structures to suit any design requirement at the deposited layer level. For example, the metal article 200 can include an internal region that forms a metal matrix composite. In still another further example, the one or more areas include at least one area that extends from an interior layer of the metal article 200 to an exterior surface of the metal article 200 such that portions of the metal article 200 are case-hardened. In an even further example, the portions of the metal article 200 that are case-hardened include at least one portion with a case-hardened depth that exceeds at least one of about 0.0001 inches, about 0.001 inches, about 0.010 inches, about 0.020 inches, about 0.030 inches and about 0.040 inches or any other suitable case-hardened depth.

In still another example of the method 100, the selectively establishing 106 of the reactive atmosphere 1230 is prior to the establishing 102 of the non-reactive atmosphere 1228. In still yet another example of the method 100, the establishing 102 of the non-reactive atmosphere 1228 and the selectively establishing 106 of the reactive atmosphere 1230 are repeated during the melting 104 of the metal material 1208 to deposit molten material in the plurality of layers 202 until the metal article 200 is complete.

With reference again to Figs, 1-3 and 12, in one or more examples, a method 300 for hardening select portions of a metal article 200 also includes the method 100 of Fig. 1. The method 300 begins a 302 where at least one inert gas 1220 is received from at least one first gas supply 1222. At 304, the at least one inert gas 1220 is routed to the build chamber 1202 to establish the non-reactive atmosphere 1228. The method 300 continues from 304 to 102 of method 100.

In another example, the method 300 continues from 302 to opening 306 an outlet path 1236 from the build chamber 1202 to purge gaseous content 1238 of the build chamber 1202 in conjunction with the routing of the at least one inert gas 1220 to the build chamber 1202. The method 300 continues from 306 to 102 of method 100.

In yet another example of the method 300, the gaseous content 1238 purged from the build chamber 1202 includes air, one or more reactant gas, one or more inert gas or any other gas that may be present within the build chamber 1202 in any suitable combination.

In still another example of the method 300, the outlet path 1236 from the build chamber 1202 remains open during the additive manufacturing process to enable a continuous flow of the at least one inert gas 1220 to the build chamber 1202.

With reference again to Figs, 1-4 and 12, in one or more examples, a method 400 for hardening select portions of a metal article 200 also includes the methods 100, 300 of Figs. 1 and 3. The method 400 continues from 306 of Fig. 3 to directing 402 the outlet path 1236 is directed proximate to the molten material as the molten material is deposited for a present layer on a substrate 1212 or on the metal article 200 to facilitate removal of any reactant gas 1224 present near the molten material. For example, the substrate 1212 may be a build plate. The method 400 continues from 402 to 102 of Fig. 1.

In another example, the method 400 again includes the methods 100, 300 of Figs. 1 and 3. In this example, the method 400 continues from 306 of Fig. 3 to applying 404 a vacuum to the outlet path 1236 of the build chamber 1202 to assist purging of the gaseous content 1238 of the build chamber 1202. At 406, the vacuum on the outlet path 1236 of the build chamber 1202 is stopped after a predetermined time based on projected completion of the purging. For example, the vacuum may be stopped by closing a valve at an outlet port 1234, a vacuum pump 1242 or anywhere in between. The method 400 continues from 406 to 102 of Fig. 1. For example, the vacuum may be applied at various times to establish a suitable environment.

In yet another example, the method 400 also includes the methods 100, 300 of Figs. 1 and 3. In this example, the method 400 continues from 306 of Fig. 3 to closing 408 the outlet path 1236 from the build chamber 1202 after a predetermined time to seal the build chamber 1202 during the additive manufacturing process. The method 400 continues from 408 to 102 of Fig. 1.

With reference again to Figs, 1, 2, 5 and 12, in one or more examples, in another example of the method 100, the melting 104 of the metal material 1208 includes forming 502 a melt pool as the molten material is deposited for a present layer on a substrate 1212 or on the metal article 200.

In yet another example of method 100, at least one parameter of the melt pool is controlled to manage the chemical reaction that hardens the at least one select portion 204 of the multiple select layers 206 of the metal article 200. In a further example, the at least one parameter of the melt pool includes a metal pool size, a metal pool temperature, a transition time from molten material to solidification or any other suitable parameter. Control of the operation of the energy source and the corresponding parameters may be based on a three-dimensional digital model 1232 of the metal article 200.

With reference again to Figs, 1, 2, 6 and 12, in one or more examples, a method 600 for hardening select portions of a metal article 200 also includes the method 100 of Fig. 1. The method 600 continues from 104 of Fig. 1 to 602 where at least one inert gas 1220 is received from at least one first gas supply 1222 and at least one reactant gas 1224 is received from at least one second gas supply 1226. At 604, the at least one inert gas 1220 and the at least one reactant gas 1224 are routed to the build chamber 1202 to establish the reactive atmosphere 1230. The method 600 continues from 604 to 106 of Fig. 1.

In another example, the method 600 also includes directing 606 the at least one inert gas 1220 and the at least one reactant gas 1224 to a location within the build chamber 1202 proximate to the molten material as the molten material is deposited for a present layer on a substrate 1212 or on the metal article 200. For example, a dedicated nozzle or gas jet 1246 may be used to direct the at least one inert gas 1220 and the at least one reactant gas 1224 to a location proximate to the molten material. In this example, the method 600 continues from 606 to 106 of Fig. 1.

With reference again to Figs, 1, 2, 6, 7 and 12, in one or more examples, a method 700 for hardening select portions of a metal article 200 includes the methods 100, 600 of Figs. 1 and 6. The method 700 continues from 602 of Fig. 6 to 702 where the at least one inert gas 1220 from the at least one first gas supply 1222 and the at least one reactant gas 1224 from the at least one second gas supply 1226 are mixed to form a predetermined reactant gas mixture 1227. At 704, the predetermined reactant gas mixture 1227 is routed to the build chamber 1202 to establish the reactive atmosphere 1230. The method 700 continues from 704 to 106 of Fig. 1.

In another example, the method 700 also includes directing 706 the predetermined reactant gas mixture 1227 to a location within the build chamber 1202 proximate to the molten material as the molten material is deposited for a present layer on a substrate 1212 or on the metal article 200. For example, a dedicated nozzle or gas jet 1246 may be used to direct the predetermined reactant gas mixture 1227 to a location proximate to the molten material. In this example, the method continues from 706 to 106 of Fig. 1.

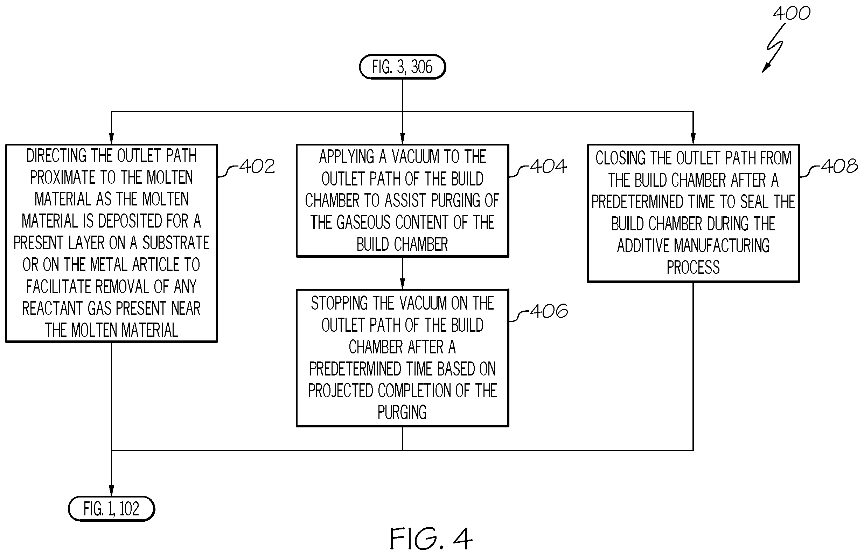

With reference again to Figs, 1, 2, 4, 6, 8 and 12, in one or more examples, a method 800 for hardening select portions of a metal article 200 includes the methods 100, 400, 600 of Figs. 1, 4 and 6. The method 800 continues from 602 of Fig. 6 to 802 where an outlet path 1236 is opened from the build chamber 1202 to purge gaseous content 1238 of the build chamber 1202 in conjunction with the routing of the at least one inert gas 1220 and the at least one reactant gas 1224 to the build chamber 1202. The method 800 continues from 802 to 106 of Fig. 1. In another example of the method 800, the outlet path 1236 from the build chamber 1202 remains open during the additive manufacturing process to enable a continuous flow of the at least one inert gas 1220 and the at least one reactant gas 1224 to the build chamber 1202. In yet another example, the method 800 continues from 802 to 404 of Fig. 4 where a vacuum is applied to the outlet path 1236. Then, at 406, the vacuum is stopped. For example, the vacuum may be stopped by closing a valve at an outlet port 1234, a vacuum pump 1242 or anywhere in between. In this example, the method 800 continues from 406 to 106 of Fig. 1. In still another example, the method 800 continues from 802 to 408 of Fig. 4 where the outlet path 1236 is closed. In this example, the method 800 continues from 408 to 106 of Fig. 1.

With reference again to Figs, 1, 2, 4, 9 and 12, in one or more examples, a method 900 for hardening select portions of a metal article 200 includes the methods 100, 400 of Figs. 1 and 4. The method 800 continues from 104 of Fig. 1 to 902 where at least one predetermined reactant gas mixture 1227 is received from at least one mixed gas supply 1229. At 904, the at least one predetermined reactant gas mixture 1227 is routed to the build chamber 1202 to establish the reactive atmosphere 1230. The method 900 continues from 904 to 106 of Fig. 1.

In another example, the method 900 also includes directing 906 the at least one predetermined reactant gas mixture 1227 to a location within the build chamber 1202 proximate to the molten material as the molten material is deposited for a present layer on a substrate 1212 or on the metal article 200. For example, a dedicated nozzle or gas jet 1246 may be used to direct the at least one predetermined reactant gas mixture 1227 to a location proximate to the molten material. In this example, the method 900 continues from 906 to 106 of Fig. 1.

In another example, the method 900 also includes opening 908 an outlet path 1236 from the build chamber 1202 to purge gaseous content 1238 of the build chamber 1202 in conjunction with the routing of the at least one predetermined reactant gas mixture 1227 to the build chamber 1202. In a further example, the outlet path 1236 from the build chamber 1202 remains open during the additive manufacturing process to enable a continuous flow of one or more of the at least one inert gas 1220 and the at least one predetermined reactant gas mixture 1227 to the build chamber 1202. In another further example, the method 900 continues from 908 to 404 of Fig. 4 where a vacuum is applied to the outlet path 1236. Then, at 406, the vacuum is stopped. For example, the vacuum may be stopped by closing a valve at an outlet port 1234, a vacuum pump 1242 or anywhere in between. In this example, the method 900 continues from 406 to 106 of Fig. 1. In yet another further example, the method 900 continues from 908 to 408 of Fig. 4 where the outlet path 1236 is closed. In this example, the method 900 continues from 408 to 106 of Fig. 1.

With reference again to Figs, 1, 2, 10 and 12, in one or more examples, a method 1000 for hardening select portions of a metal article 200 includes the method 100 of Fig. 1. The method 1000 continues from 106 of Fig. 1 to 1002 for alternating 1002 between the establishing 102 of the non-reactive atmosphere 1228 and the selectively establishing 106 of the reactive atmosphere 1230 during the melting 104 of the metal material 1208 to deposit molten material that is not hardened during periods of the non-reactive atmosphere 1228 and to deposit molten material that is hardened during periods of the reactive atmosphere 1230 such that the metal article 200 includes first areas in which at least certain portions of consecutive layers are hardened and second areas in which at least other portions of consecutive layers are not hardened. In other examples of the method 100, the alternating 1002 may be accomplished by moving the metal article 200 from a first system dedicated to additive manufacturing using a non-reactive atmosphere 1228 to a second system dedicated to additive manufacturing using a reactive atmosphere 1230. The transitions between the first and second systems may be based on hardened and non-hardened areas defined in a design for the metal article 200.

In another example of the method 1000, the melting 104 of the metal material 1208 to deposit molten material in the plurality of layers 202 to build the metal article 200 and the translational movement of the metal article 200 and/or the energy source 1216 is paused at select locations in which there are predetermined transitions from the non-reactive atmosphere 1228 to the reactive atmosphere 1230 and vice versa. In a further example, the select locations and the predetermined transitions are based on a three-dimensional digital model 1232 of the metal article 200 that are designated for hardening.

With reference again to Figs, 1, 2, 11 and 12, in one or more examples, a method 1100 for hardening select portions of a metal article 200 includes the method 100 of Fig. 1. The method 1100 continues from 106 of Fig. 1 to 1102 for heat treating 1102 the metal article 200 after completion of the additive manufacturing process to optimize the hardening of the select portions of the metal article hardened during the additive manufacturing process. At 1104, the metal article 200 is machined to produce a finish on the metal article 200.

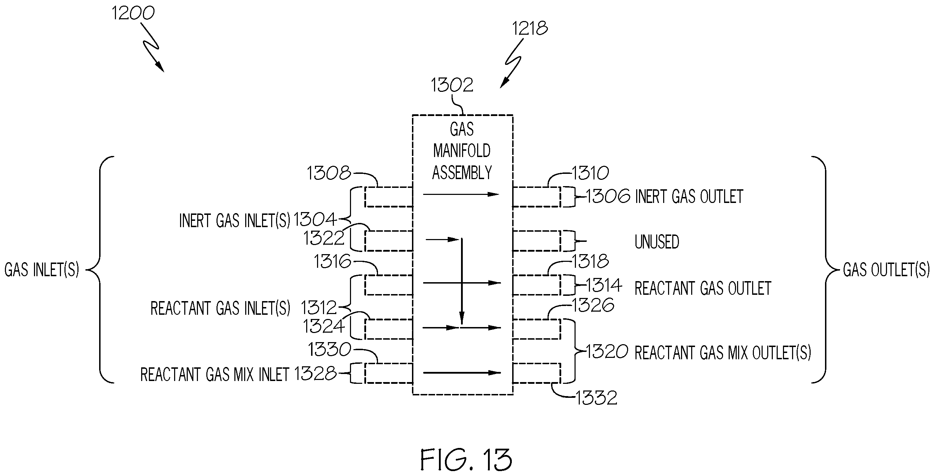

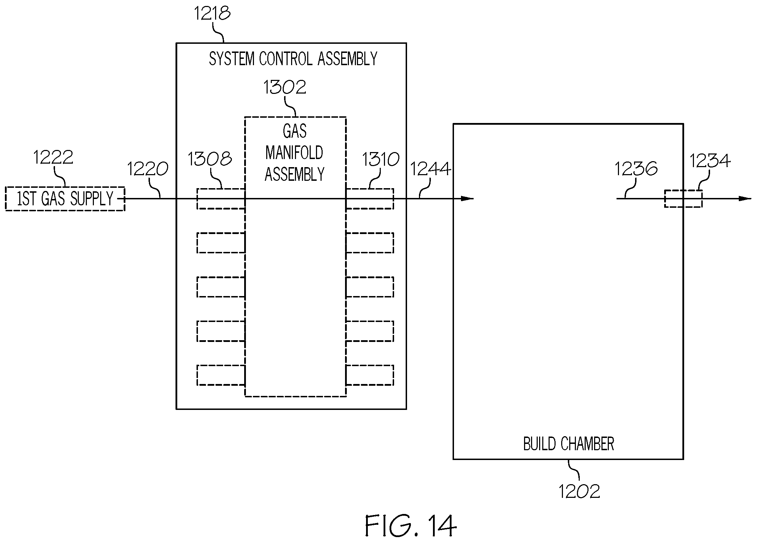

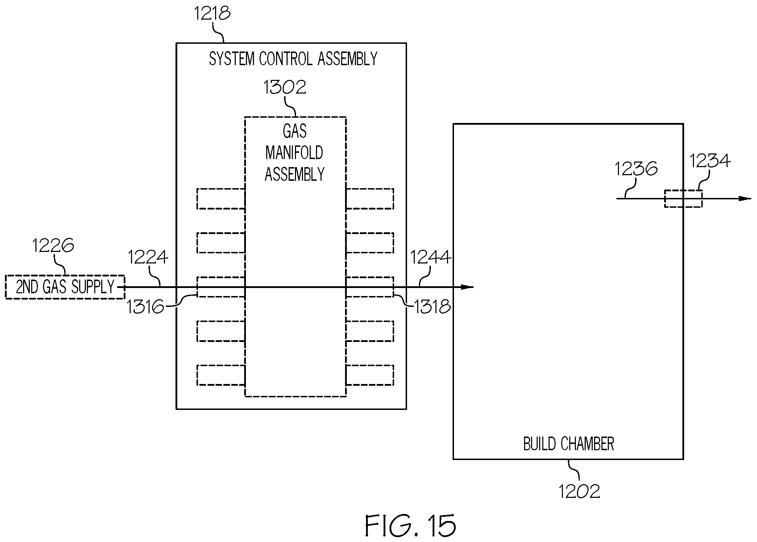

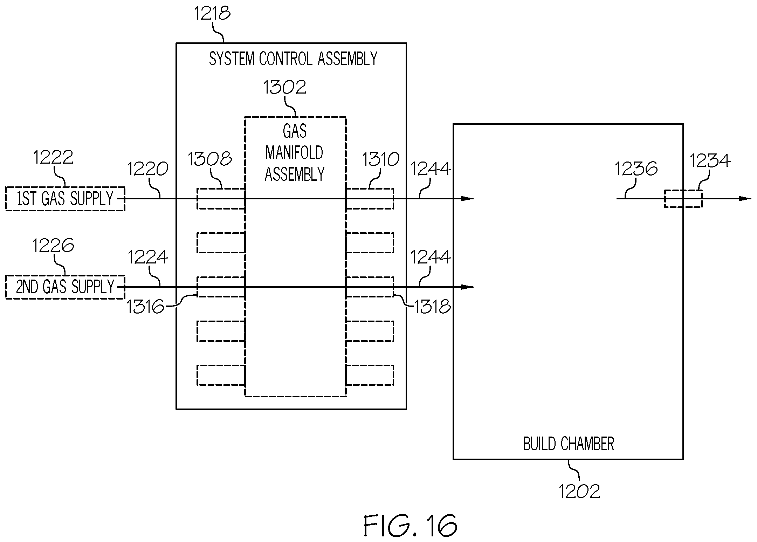

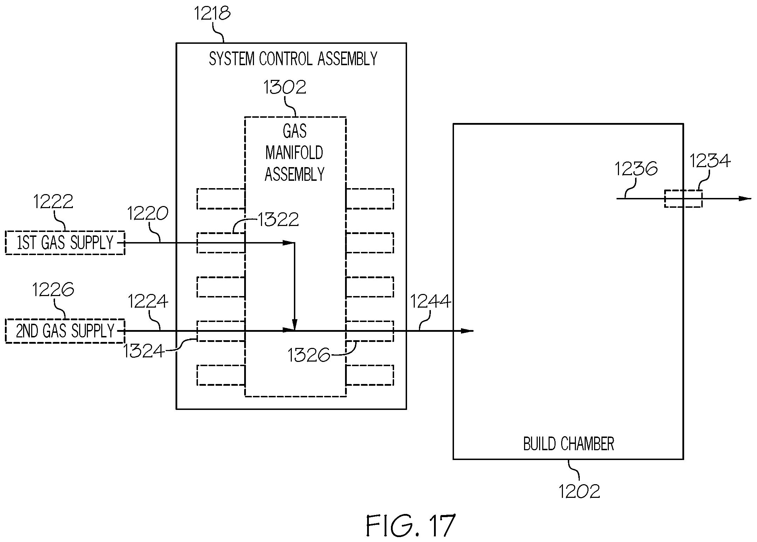

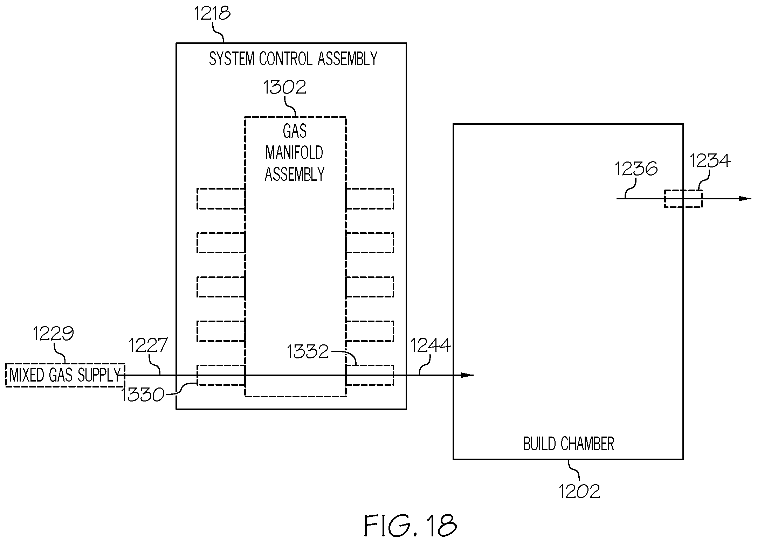

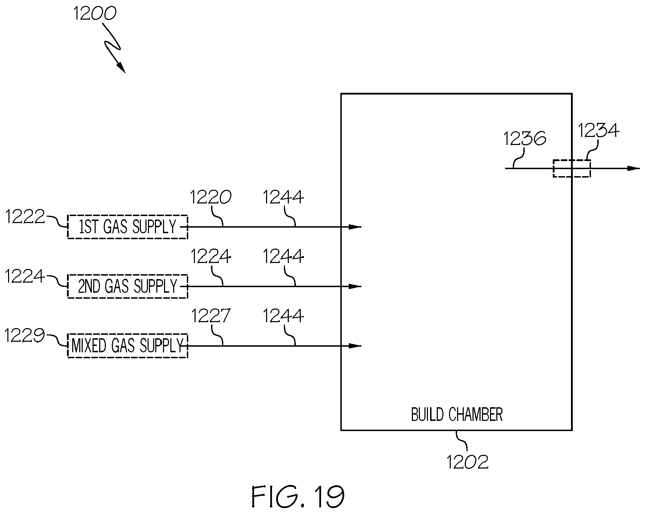

Referring generally to Figs. 1, 2 and 12-19, by way of examples, the present disclosure is directed to an additive manufacturing system 1200 for hardening select portions of a metal article 200. Fig. 1 discloses an example of a method 100 for hardening select portions of a metal article 200. Fig. 2 discloses an example of the metal article 200. Fig. 12 discloses various examples of an additive manufacturing system 1200. Fig. 13 discloses various examples of a gas manifold assembly 1302 for the additive manufacturing system 1200. Figs. 14-18 disclose various examples of configurations for the gas manifold assembly 1302. Fig. 19 discloses various examples of a build chamber 1202 of the additive manufacturing system 1200.

With reference again to Figs, 1, 2 and 12, in one or more examples, an additive manufacturing system 1200 for hardening select portions of a metal article 200 includes a build chamber 1202, a material handling assembly 1206, a substrate 1212, an energy source assembly 1214, a translational assembly 1210 and a system control assembly 1218. The build chamber 1202 configured to provide a controlled environment 1204 for additive manufacturing of the metal article 200. The material handling assembly 1206 configured to feed a metal material 1208 inside the build chamber 1202 in conjunction with an additive manufacturing process. The substrate 1212 configured to at least temporarily retain the metal article 200 during the additive manufacturing process. For example, the substrate 1212 may be a build plate. The energy source assembly 1214 configured to melt the metal material 1208 using an energy source 1216 to deposit molten material in a plurality of layers 202 to build the metal article 200 on the substrate 1212. The translational assembly 1210 configured to provide translational movement of at least one of the substrate 1212 and the energy source assembly 1214 based on predetermined locations for deposition of the molten material in conjunction with the additive manufacturing process. The system control assembly 1218 in operative communication with the material handling assembly 1206, the energy source assembly 1214 and the translational assembly 1210. The system control assembly 1218 configured to control establishment of a non-reactive atmosphere 1228 within the build chamber 1202, configured to control feeding of the metal material 1208 by the material handling assembly 1206, configured to control melting 104 of the metal material 1208 by the energy source 1216 in conjunction with controlling the translational assembly 1210 and configured to control selective establishment of a reactive atmosphere 1230 within the build chamber 1202 to cause a chemical reaction to harden at least one select portion 204 of each layer in multiple select layers 206 of the plurality of layers 202 in conjunction with the melting 104 and subsequent solidification of the molten material. For example, the metal articles with select portions hardened may be built in their entirety using additive manufacturing or an existing metal article manufactured using other techniques may have hardened material selectively added using additive manufacturing. In other examples, a vacuum may be applied initially to establish a suitable environment.

In another example of the additive manufacturing system 1200, the non-reactive atmosphere 1228 includes at least one inert gas 1220. In a further example, the at least one inert gas 1220 includes argon, helium, neon, nitrogen or any other suitable inert gas in any suitable combination. Nitrogen, for example, can be used as a nonreactive or inert gas for certain metal materials. However, nitrogen may be a reactant gas for other metal materials, such as titanium. In yet another example of the additive manufacturing system 1200, in relation to the additive manufacturing process, the metal material 1208 includes a metal powder, a metal wire or any other suitable metal material in any suitable combination. In still another example of the additive manufacturing system 1200, the metal material 1208 includes titanium, a titanium alloy, a steel, a corrosion resistant steel, a precipitation hardened corrosion resistant steel, a maraging steel, a ferrous steel alloy or any other suitable metal material in any suitable combination. In still yet another example of the additive manufacturing system 1200, the energy source 1216 includes at least one laser beam, at least one electron beam, at least one plasma arc or any other suitable energy source in any suitable combination. In still yet another example of the method 100, the energy source 1216 includes at least one laser beam, at least one electron beam, at least one plasma arc or any other suitable energy source in any suitable combination.

In various examples, the depth of a given layer of the plurality of layers 202 deposited during the additive manufacturing process ranges between about 0.0001 inches to about 0.001 inches, about 0.001 inches to about 0.002 inches, about 0.002 inches to about 0.004 inches, about 0.004 inches to about 0.010 inches, about 0.010 inches to about 0.020 inches or any other suitable depth range for the additive manufacturing process. The minimum depth of a given layer is based on a minimum deposited thickness. The deposited thickness may be based on at least one of metal material feedstock size and energy provided to create the melt pool. For example, an additive manufacturing energy source could be used for "smoothing" and, using the reactive atmosphere, a very thin hardened layer could be deposited on the metal article. In various other examples, the reactive atmosphere 1230 may include a mixture in which the reactant gas ranges from about 0.1 percent to about 50 percent, from about 0.2 percent to about 40 percent, from about 0.5 percent to about 30 percent, from about 0.8 percent to about 20 percent, from about 1.0 percent to about 10 percent or any other suitable reactant gas percentage. For example, where a higher reactant gas percentage (e.g., higher than 50 percent) is suitable for a given operation, higher percentages are contemplated for the mixture.

In another example of the additive manufacturing system 1200, the system control assembly 1218 is configured to control at least one parameter of the energy source 1216 and the translational assembly 1210 to manage the chemical reaction that hardens the at least one select portion 204 of the multiple select layers 206 of the metal article 200. In a further example, the at least one parameter of the energy source 1216 and the translational assembly 1210 includes an energy source dwell time for select predetermined locations relating to hardening for the at least one select portion 204 of each layer in the multiple select layers 206 of the metal article 200, a laser deposition dwell time associated with the energy source 1216, a plasma arc dwell time associated with the energy source (1216), an electron beam dwell time associated with the energy source 1216 or any other suitable parameter in any suitable combination. Control of the translational movement, operation of the energy source and the corresponding parameters may be based on a three-dimensional digital model 1232 of the metal article 200.

In yet another example of the additive manufacturing system 1200, the system control assembly 1218 is configured to control the translational assembly 1210 regarding linear movement of the metal article 200 in at least one of an X-axis, a Y-axis and a Z-axis. In a further example, the system control assembly 1218 is configured to control the translational assembly 1210 regarding rotational movement of the metal article 200 in reference to at least one of the X-axis, the Y-axis and the Z-axis. In another further example, the system control assembly 1218 is configured to control the translational assembly 1210 regarding angular movement of the metal article 200 in reference to at least one of the X-axis, the Y-axis and the Z-axis. In still another example of the additive manufacturing system 1200, the system control assembly 1218 is configured to store or access a three-dimensional digital model 1232 of the metal article 200 upon which the predetermined locations for deposition of the molten material are based.

In still yet another example of the additive manufacturing system 1200, the reactive atmosphere 1230 includes a predetermined reactant gas mixture 1227 of at least one inert gas 1220 and at least one reactant gas 1224. In a further example, the chemical reaction includes nitriding. In an even further example, the at least one reactant gas 1224 includes a nitrogen gas, a nitrogen-based gas, an ammonia gas or any other suitable reactant gas in any suitable combination. In another further example, the chemical reaction includes carburizing. In an even further example, the at least one reactant gas 1224 includes a carbon-based gas, an acetylene gas, a propane gas, a butane gas, a methane gas, a carbon monoxide gas or any other suitable reactant gas in any suitable combination. When reactive gases or the by-products of chemical reactions create hazardous gas mixtures, the process will be managed by at least one of the use of vacuum, partial pressure, inert gas purging and gas safety control systems.

In another example of the additive manufacturing system 1200, the system control assembly 1218 is configured to store or access a three-dimensional digital model 1232 of the metal article 200 upon which each select portion 204 of the metal article 200 that is hardened is based on corresponding locations that are designated for hardening. In yet another example of the additive manufacturing system 1200, the at least one select portion 204 of each layer in multiple select layers 206 of the metal article 200 that are hardened include one or more areas in which portions of consecutive layers are hardened. In a further example, the portions of consecutive layers that are hardened include at least one portion with a hardened depth that ranges from at least one of about 0.0001 inches to a depth through the metal article 200, about 0.002 inches to a depth through the metal article 200, about 0.004 inches to a depth through the metal article 200, about 0.006 inches to a depth through the metal article 200, about 0.008 inches to a depth through the metal article 200, about 0.010 inches to a depth through the metal article 200, about 0.020 inches to a depth through the metal article 200, about 0.030 inches to a depth through the metal article 200, about 0.040 inches to a depth through the metal article 200 or any other suitable hardened depth. In another further example, the one or more areas include at least one area at an interior of the metal article 200 that does not extend to an exterior surface of the metal article 200. As described above, the metal article 200 can be built with intermittent hardened internal structures to suit any design requirement at the deposited layer level. For example, the metal article 200 can include an internal region that forms a metal matrix composite. In yet another further example, the one or more areas include at least one area that extends from a first layer of the metal article 200 to consecutive layers. In still another further example, the one or more areas include at least one area that extends from an interior layer of the metal article 200 to an exterior surface of the metal article 200 such that portions of the metal article 200 are case-hardened. In an even further example, the portions of the metal article 200 that are case-hardened include at least one portion with a case-hardened depth that exceeds about 0.0001 inches, about 0.001 inches, about 0.010 inches, about 0.020 inches, about 0.030 inches, about 0.040 inches or any other suitable case-hardened depth.

In yet another example of the additive manufacturing system 1200, the system control assembly 1218 is configured to begin the additive manufacturing process by selectively establishing 106 the reactive atmosphere 1230 prior to establishing 102 the non-reactive atmosphere 1228. In still another example of the additive manufacturing system 1200, the system control assembly 1218 is configured to repeat the establishing 102 of the non-reactive atmosphere 1228 and the selectively establishing 106 of the reactive atmosphere 1230 during the melting 104 of the metal material 1208 to deposit molten material in the plurality of layers 202 until the metal article 200 is complete.

With reference again to Figs, 1, 2 and 12-19, in one or more examples of the additive manufacturing system 1200, the system control assembly 1218 includes a gas manifold assembly 1302. The gas manifold assembly 1302 including at least one inert gas inlet 1304 and at least one inert gas outlet 1306. The at least one inert gas inlet 1304 configured to receive the at least one inert gas 1220 from the at least one first gas supply 1222 at a first inert gas inlet 1308. The gas manifold assembly 1302 configured to channel the first inert gas inlet 1308 to a first inert gas outlet 1310. The gas manifold assembly 1302 configured to provide the at least one inert gas 1220 to the build chamber 1202 via the first inert gas outlet 1310 to establish the non-reactive atmosphere 1228.

In another example of the additive manufacturing system 1200, the build chamber 1202 includes an outlet port 1234 configured to open an outlet path 1236 from the build chamber 1202 to purge gaseous content 1238 of the build chamber 1202 in conjunction with the routing of the at least one inert gas 1220 to the build chamber 1202. In a further example, the build chamber 1202 also includes an exhaust conduit 1240 coupled to the outlet port 1234 and configured to direct the outlet path 1236 proximate to the molten material as the molten material is deposited for a present layer on the substrate 1212 or on the metal article 200 to facilitate removal of any reactant gas 1224 present near the molten material. For example, the substrate 1212 may be a build plate. In another further example, the gaseous content 1238 purged from the build chamber 1202 includes air, one or more reactant gas, one or more inert gas or any other gas that may be present within the build chamber 1202 in any suitable combination. In yet another further example, the outlet port 1234 is configured to remain open during the additive manufacturing process such that the outlet path 1236 remains open to enable a continuous flow of the at least one inert gas 1220 to the build chamber 1202. In still another further example, the additive manufacturing system 1200 also includes a vacuum pump 1242 coupled to the outlet port 1234 of the build chamber 1202 and configured to apply a vacuum to the outlet path 1236 to assist purging of the gaseous content 1238 of the build chamber 1202. In an even further example, the vacuum pump 1242 is configured to stop the vacuum on the outlet path 1236 of the build chamber 1202 after a predetermined time based on projected completion of the purging. For example, the vacuum may be stopped by closing a valve at an outlet port 1234, a vacuum pump 1242 or anywhere in between. In still yet another further example, the outlet port 1234 is configured to close the outlet path 1236 from the build chamber 1202 after a predetermined time to seal the build chamber 1202 during the additive manufacturing process.

In yet another example of the additive manufacturing system 1200, the gas manifold assembly 1302 also includes at least one reactant gas inlet 1312 and at least one reactant gas outlet 1314. The at least one reactant gas inlet 1312 configured to receive the at least one reactant gas 1224 from the at least one second gas supply 1226 at a first reactive gas inlet 1316. The gas manifold assembly 1302 configured to channel the first reactive gas inlet 1316 to a first reactive gas outlet 1318. The gas manifold assembly 1302 configured to route the at least one reactant gas 1224 to the build chamber 1202 via the first reactant gas outlet 1318 to establish the reactive atmosphere 1228. In a further example, the build chamber 1202 includes at least one supply conduit 1244 coupled to the first reactant gas outlet 1318 of the manifold assembly 1302. The at least one supply conduit 1244 configured to direct the at least one inert gas 1220 and the at least one reactant gas 1224 to a location within the build chamber 1202 proximate to the molten material as the molten material is deposited for a present layer on the substrate 1212 or on the metal article 200. For example, a dedicated nozzle or gas jet 1246 may be used to direct the at least one inert gas 1220 and the at least one reactant gas 1224 to a location proximate to the molten material. In another further example, the build chamber 1202 includes an outlet port 1234 configured to open an outlet path 1236 from the build chamber 1202 to purge gaseous content 1238 of the build chamber 1202 in conjunction with the routing of the at least one inert gas 1220 and the at least one reactant gas 1224 to the build chamber 1202. In an even further example, the outlet port 1234 is configured to remain open during the additive manufacturing process such that the outlet path 1236 remains open to enable a continuous flow of the at least one inert gas 1220 and the at least one reactant gas 1224 to the build chamber 1202.

In still another further example, the gas manifold assembly 1302 also includes at least one reactant gas inlet 1312 and at least one reactant gas mix outlet 1320. The at least one inert gas inlet 1304 configured to receive the at least one inert gas 1220 at a second inert gas inlet 1322. The at least one reactant gas inlet 1312 configured to receive the at least one reactant gas 1224 at a second reactant gas inlet 1324. The gas manifold assembly 1302 configured to mix the at least one inert gas 1220 received at the second inert gas inlet 1322 and the at least one reactant gas 1224 received at the second reactant gas inlet 1324 to form a predetermined reactant gas mixture 1227. The gas manifold assembly 1302 configured to channel the predetermined reactant gas mixture 1227 to a first reactant gas mix outlet 1326. The gas manifold assembly 1302 configured to route the predetermined reactant gas mixture 1227 to the build chamber 1202 via the first reactant gas mix outlet 1326 to establish the reactive atmosphere 1230. In an even further example, the build chamber 1202 includes at least one supply conduit 1244 coupled to the first reactant gas mix outlet 1326 of the manifold assembly 1302. The at least one supply conduit 1244 configured to direct the predetermined reactant gas mixture 1227 to a location within the build chamber 1202 proximate to the molten material as the molten material is deposited for a present layer on the substrate 1212 or on the metal article 200. For example, a dedicated nozzle or gas jet 1246 may be used to direct the predetermined reactant gas mixture 1227 to a location proximate to the molten material. In another even further example, the building chamber 1202 includes an outlet port 1234 configured to open an outlet path 1236 from the build chamber 1202 to purge gaseous content 1238 of the build chamber 1202 in conjunction with the routing of the at least one inert gas 1220 and the at least one reactant gas 1224 to the build chamber 1202. In an even yet further example, the outlet port 1234 is configured to remain open during the additive manufacturing process such that the outlet path 1236 remains open to enable a continuous flow of the at least one inert gas 1220 and the at least one reactant gas 1224 to the build chamber 1202.

In still another example of the additive manufacturing system 1200, the gas manifold assembly 1302 also includes at least one reactant gas mix inlet 1328 and at least one reactant gas mix outlet 1320. The at least one reactant gas mix inlet 1328 configured to receive a predetermined reactant gas mixture 1227 at a first reactant gas mix inlet 1330. The gas manifold assembly 1302 configured to channel the predetermined reactant gas mixture 1227 to a second reactant gas mix outlet 1332. The gas manifold assembly 1302 configured to route the predetermined reactant gas mixture 1227 to the build chamber 1202 via the second reactant gas mix outlet 1332 to establish the reactive atmosphere 1230. In a further example, the build chamber 1202 includes at least one supply conduit 1244 coupled to the second reactant gas mix outlet 1332 of the manifold assembly 1302. The at least one supply conduit 1244 configured to direct the at least one predetermined reactant gas mixture 1227 to a location within the build chamber 1202 proximate to the molten material as the molten material is deposited for a present layer on the substrate 1212 or on the metal article 200. For example, a dedicated nozzle or gas jet 1246 may be used to direct the at least one predetermined reactant gas mixture 1227 to a location proximate to the molten material. In another further example, the build chamber 1202 includes an outlet port 1234 configured to open an outlet path 1236 from the build chamber 1202 to purge gaseous content 1238 of the build chamber 1202 in conjunction with the routing of the at least one predetermined reactant gas mixture 1227 to the build chamber 1202. In an even further example, the outlet port 1234 is configured to remain open during the additive manufacturing process such that the outlet path 1236 remains open to enable a continuous flow of one or more of the at least one inert gas 1220 and the at least one predetermined reactant gas mixture 1227 to the build chamber 1202.

With reference again to Figs, 1, 2 and 12, in one or more examples, in another example of the additive manufacturing system 1200, the energy source 1216 is configured to form a melt pool in conjunction with the melting 104 of the metal material 1208 as the molten material is deposited for a present layer on the substrate 1212 or on the metal article 200. In a further example, the system control assembly 1218 is configured to control at least one parameter of the melt pool to manage the chemical reaction that hardens the at least one select portion 204 of the multiple select layers 206 of the metal article 200. In an even further example, the at least one parameter of the melt pool includes a metal pool size, a metal pool temperature, a transition time from molten material to solidification or any other suitable parameter. Control of the translational movement, operation of the energy source and the corresponding parameters may be based on a three-dimensional digital model 1232 of the metal article 200.

In yet another example of the additive manufacturing system 1200, the system control assembly 1218 is configured to alternate between the establishing 102 of the non-reactive atmosphere 1228 and the establishing 102 of the reactive atmosphere 1230 during the melting 104 of the metal material 1208 to deposit molten material that is not hardened during periods of the non-reactive atmosphere 1228 and to deposit molten material that is hardened during periods of the reactive atmosphere 1230 such that the metal article 200 includes first areas in which at least certain portions of consecutive layers are hardened and second areas in which at least other portions of consecutive layers are not hardened. In a further example, the system control assembly 1218 is configured to pause the melting 104 of the metal material 1208 to deposit molten material in the plurality of layers 202 to build the metal article 200 and the translational movement provided by the translational assembly 1210 at select locations in which there are predetermined transitions from the non-reactive atmosphere 1228 to the reactive atmosphere 1230 and vice versa. In another further example, the system control assembly 1218 is configured to store or access a three-dimensional digital model 1232 of the metal article 200 upon which the select locations and the predetermined transitions are based on corresponding locations that are designated for hardening. In other examples, the additive manufacturing system 1200 may include a first system dedicated to additive manufacturing using a non-reactive atmosphere 1228 and a second system dedicated to additive manufacturing using a reactive atmosphere 1230. In these example, the alternating of the hardened and non-hardened areas in the metal article 200 may be accomplished by moving the metal article back and forth between the first system and the second system based on hardened and non-hardened areas defined in a design for the metal article 200.

Referring generally to Figs. 2 and 12, by way of examples, the present disclosure is directed to a metal article 200. Fig. 2 discloses an example of the metal article 200. Fig. 12 discloses various examples of an additive manufacturing system 1200 for hardening select portions of the metal article 200.

With reference again to Figs, 2 and 12, in one or more examples, a metal article 200 includes a plurality of layers 202 of a metal material 1208 deposited via an additive manufacturing process. At least one select portion 204 of each layer in multiple select layers 206 of the plurality of layers 202 being hardened via a chemical reaction caused by a reactive atmosphere 1230 selectively established during select periods of the additive manufacturing process. Remaining portions 208 of the multiple select layers 206 and remaining layers 210 of the plurality of layers 202 were deposited in remaining periods of the additive manufacturing process in which a non-reactive atmosphere 1228 was established.

In another example of the metal article 200, the non-reactive atmosphere 1228 includes at least one inert gas 1220. In yet another example of the metal article 200, in relation to the additive manufacturing process, the metal material 1208 includes a metal powder, a metal wire or any other suitable metal material in any suitable combination. In still another example of the metal article 200, the metal material 1208 includes titanium, a titanium alloy, a steel, a corrosion resistant steel, a precipitation hardened corrosion resistant steel, a maraging steel, a ferrous steel alloy or any other suitable metal material in any suitable combination. In still yet another example of the method 100, the energy source 1216 includes at least one laser beam, at least one electron beam, at least one plasma arc or any other suitable energy source in any suitable combination.

In various examples, the depth of a given layer of the plurality of layers 202 deposited during the additive manufacturing process ranges between about 0.0001 inches to about 0.001 inches, about 0.001 inches to about 0.002 inches, about 0.002 inches to about 0.004 inches, about 0.004 inches to about 0.010 inches, about 0.010 inches to about 0.020 inches or any other suitable depth range for the additive manufacturing process. The minimum depth of a given layer is based on a minimum deposited thickness. The deposited thickness may be based on at least one of metal material feedstock size and energy provided to create the melt pool. For example, an additive manufacturing energy source could be used for "smoothing" and, using the reactive atmosphere, a very thin hardened layer could be deposited on the metal article. In various other examples, the reactive atmosphere 1230 may include a mixture in which the reactant gas ranges from about 0.1 percent to about 50 percent, from about 0.2 percent to about 40 percent, from about 0.5 percent to about 30 percent, from about 0.8 percent to about 20 percent, from about 1.0 percent to about 10 percent or any other suitable reactant gas percentage. For example, where a higher reactant gas percentage (e.g., higher than 50 percent) is suitable for a given operation, higher percentages are contemplated for the mixture.

In still yet another example of the metal article 200, the reactive atmosphere 1230 includes a predetermined reactant gas mixture 1227 of at least one inert gas 1220 and at least one reactant gas 1224. In a further example, the at least one inert gas 1220 includes argon, helium, neon, nitrogen or any other suitable inert gas in any suitable combination. Nitrogen, for example, can be used as a nonreactive or inert gas for certain metal materials. However, nitrogen may be a reactant gas for other metal materials, such as titanium. In another further example, the chemical reaction includes nitriding. In an even further example, the at least one reactant gas 1224 includes a nitrogen gas, a nitrogen-based gas, an ammonia gas or any other suitable reactant gas in any suitable combination. In yet another further example, the chemical reaction includes carburizing. In an even further example, the at least one reactant gas 1224 includes a carbon-based gas, an acetylene gas, a propane gas, a butane gas, a methane gas, a carbon monoxide gas or any other suitable reactant gas in any suitable combination. When reactive gases or the by-products of chemical reactions create hazardous gas mixtures, the process will be managed by at least one of the use of vacuum, partial pressure, inert gas purging and gas safety control systems. In another example of the metal article 200, each select portion 204 of the metal article 200 that is hardened is based on corresponding locations in a three-dimensional digital model 1232 of the metal article 200 that are designated for hardening. In still yet another example of the method 100, the energy source 1216 includes at least one laser beam, at least one electron beam, at least one plasma arc or any other suitable energy source in any suitable combination.

In yet another example of the metal article 200, the plurality of layers 202 for the metal article 200 are arranged in alternating groups of the multiple select layers 206 with hardening and multiple remaining layers 210 without hardening. In a further example, the at least one select portion 204 of each layer in the multiple select layers 206 with hardening is greater than other portions of corresponding layer without hardening. In another further example, the at least one select portion 204 of each layer in the multiple select layers 206 with hardening includes the corresponding layer and no portion of the corresponding layer is without hardening.

In still another example of the metal article 200, the at least one select portion 204 of each layer in multiple select layers 206 of the metal article 200 that are hardened include one or more areas in which portions of consecutive layers are hardened. In a further example, the portions of consecutive layers that are hardened include at least one portion with a hardened depth that ranges from about 0.0001 inches to a depth through the metal article 200, about 0.002 inches to a depth through the metal article 200, about 0.004 inches to a depth through the metal article 200, about 0.006 inches to a depth through the metal article 200, about 0.008 inches to a depth through the metal article 200, about 0.010 inches to a depth through the metal article 200, about 0.020 inches to a depth through the metal article 200, about 0.030 inches to a depth through the metal article 200, about 0.040 inches to a depth through the metal article 200 or any other suitable range of hardened depth. In another further example, the one or more areas include at least one area at an interior of the metal article 200 that does not extend to an exterior surface of the metal article 200. As described above, the metal article 200 can be built with intermittent hardened internal structures to suit any design requirement at the deposited layer level. For example, the metal article 200 can include an internal region that forms a metal matrix composite. In yet another further example, the one or more areas include at least one area that extends from a first layer of the metal article 200 to consecutive layers. In still another further example, the one or more areas include at least one area that extends from an interior layer of the metal article 200 to an exterior surface of the metal article 200 such that portions of the metal article 200 are case-hardened. In an even further example, the portions of the metal article 200 that are case-hardened include at least one portion with a case-hardened depth that exceeds about 0.0001 inches, about 0.001 inches, about 0.010 inches, about 0.020 inches, about 0.030 inches, about 0.040 inches or any other suitable case-hardened depth.

In still yet another example of the metal article 200, in conjunction the additive manufacturing process, establishing 102 the non-reactive atmosphere 1228 and selectively establishing 106 the reactive atmosphere 1230 are repeated which results in certain portions of the metal article 200 built during periods of the reactive atmosphere 1230 to be hardened and other portions built during periods of the non-reactive atmosphere 1228 to not be hardened such that the metal article 200 includes first areas in which at least certain portions of consecutive layers are hardened and second areas in which at least other portions of consecutive layers are not hardened.

Examples of metal articles 200 and additive manufacturing systems 1200 for hardening select portions of a metal article 200 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of metal articles in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1 and 3-11, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1 and 3-11 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 2 and 12-19, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2 and 12-19, referred to above, need be included in every example and not all elements, features and/or components described herein are necessarily depicted in each illustrative example. Accordingly, some of the elements, features and/or components described and illustrated in Figs. 2 and 12-19 may be combined in various ways without the need to include other features described and illustrated in Figs. 2 and 12-19, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. Figs. 2 and 12-19, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2 and 12-19 and such elements, features and/or components may not be discussed in detail herein with reference to each of Figs. 2 and 12-19. Similarly, all elements, features and/or components may not be labeled in each of Figs. 2 and 12-19, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

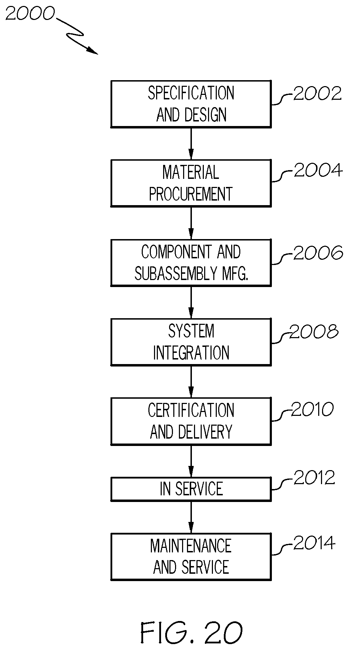

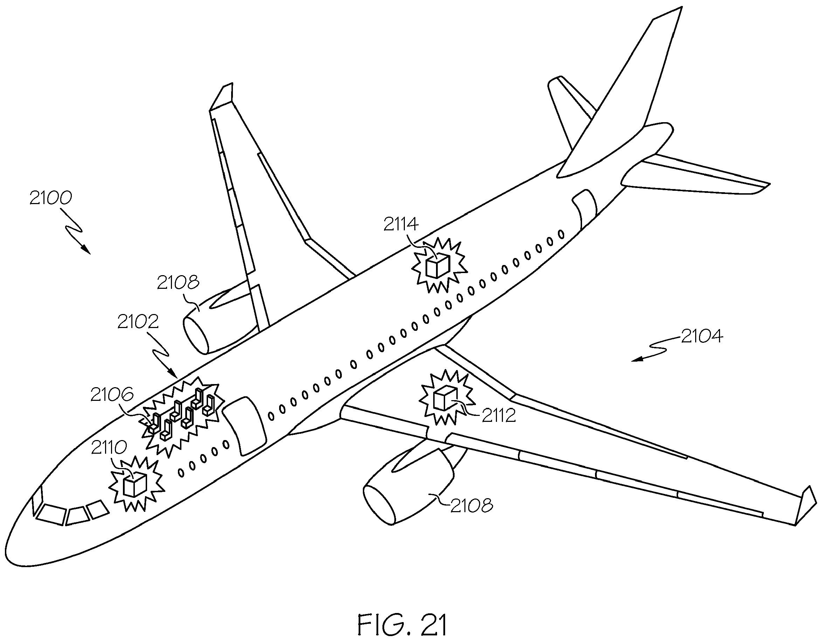

Examples of the subject matter disclosed herein may be described in the context of aircraft manufacturing and service method 2000 as shown in Fig. 20 and aircraft 2100 as shown in Fig. 21. In one or more examples, the disclosed methods and systems for associating test data for a part under test with an end item coordinate system may be used in aircraft manufacturing. During pre-production, the service method 2000 may include specification and design (block 2002) of aircraft 2100 and material procurement (block 2004). During production, component and subassembly manufacturing (block 2006) and system integration (block 2008) of aircraft 2100 may take place. Thereafter, aircraft 2100 may go through certification and delivery (block 2010) to be placed in service (block 2012). While in service, aircraft 2100 may be scheduled for routine maintenance and service (block 2014). Routine maintenance and service may include modification, reconfiguration, refurbishment, etc. of one or more systems of aircraft 2100.

Each of the processes of the service method 2000 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 21, aircraft 2100 produced by the service method 2000 may include airframe 2102 with a plurality of high-level systems 2104 and interior 2106. Examples of high-level systems 2104 include one or more of propulsion system 2108, electrical system 2110, hydraulic system 2112 and environmental system 2114. Any number of other systems may be included. Although an aerospace example is shown, the principles disclosed herein may be applied to other industries, such as the automotive industry. Accordingly, in addition to aircraft 2100, the principles disclosed herein may apply to other vehicles, e.g., land vehicles, marine vehicles, space vehicles, etc.

The disclosed systems and methods for associating test data for a part under test with an end item coordinate system may be employed during any one or more of the stages of the manufacturing and service method 2000. For example, components or subassemblies corresponding to component and subassembly manufacturing (block 2006) may be fabricated or manufactured in a manner similar to components or subassemblies produced while aircraft 2100 is in service (block 2012). Also, one or more examples of the system(s), method(s), or combination thereof may be utilized during production stages (block 2006 and block 2008), for example, by substantially expediting assembly of or reducing the cost of aircraft 2100. Similarly, one or more examples of the system or method realizations, or a combination thereof, may be utilized, for example and without limitation, while aircraft 2100 is in service (block 2012) and/or during maintenance and service (block 2014).

A further understanding of at least some of the aspects of the present disclosure is provided with reference to the following numbered clauses, in which:
Clause 1. A method for hardening select portions of a metal article, the method comprising:
   establishing a non-reactive atmosphere within a build chamber of an additive manufacturing system;
   melting a metal material using an energy source to deposit molten material in a plurality of layers to build the metal article in conjunction with controlling translational movement of at least one of the metal article and the energy source based on predetermined locations for deposition of the molten material; and
   selectively establishing a reactive atmosphere within the build chamber that causes a chemical reaction to harden at least one select portion of each layer in multiple select layers of the plurality of layers in conjunction with the melting and subsequent solidification of the molten material.
Clause 2. The method of clause 1 wherein the non-reactive atmosphere comprises at least one inert gas.
Clause 3. The method of clause 2 wherein the at least one inert gas comprises at least one of argon, helium, neon and nitrogen.
Clause 4. The method of any of clauses 1-3 wherein, in relation to the additive manufacturing process, the metal material comprises at least one of a metal powder and a metal wire.
Clause 5. The method of any of clauses 1-4 wherein the metal material comprises at least one of titanium, a titanium alloy, a steel, a corrosion resistant steel, a precipitation hardened corrosion resistant steel, a maraging steel and a ferrous steel alloy.
Clause 6. The method of any of clauses 1-5 wherein the energy source comprises one or more of at least one laser beam, at least one electron beam and at least one plasma arc.
Clause 7. The method of any of clauses 1-6 wherein at least one parameter of the translational movement of the metal article, the translation movement of the energy source and operation of the energy source is controlled to manage the chemical reaction that hardens the at least one select portion of the multiple select layers of the metal article.
Clause 8. The method of clause 7 wherein the at least one parameter of the energy source and the translational movement of the metal article and/or the energy source comprises at least one of an energy source dwell time for select predetermined locations relating to hardening for the at least one select portion of each layer in the multiple select layers of the metal article, a laser deposition dwell time associated with the energy source, a plasma arc dwell time associated with the energy source and an electron beam dwell time associated with the energy source.
Clause 9. The method of any of clauses 1-8 wherein the translational movement of the metal article and/or the energy source comprises control of linear movement in at least one of an X-axis, a Y-axis and a Z-axis.
Clause 10. The method of clause 9 wherein the translational movement of the metal article and/or the energy source comprises control of rotational movement in reference to at least one of the X-axis, the Y-axis and the Z-axis.
Clause 11. The method of clause 9 wherein the translational movement of the metal article and/or the energy source comprises control of angular movement in reference to at least one of the X-axis, the Y-axis and the Z-axis.
Clause 12. The method of any of clauses 1-11 wherein the predetermined locations for deposition of the molten material are based on a three-dimensional digital model of the metal article.
Clause 13. The method of any of clauses 1-12 wherein the reactive atmosphere comprises a predetermined reactant gas mixture of at least one inert gas and at least one reactant gas.
Clause 14. The method of clause 13 wherein the chemical reaction comprises nitriding.
Clause 15. The method of clause 14 wherein the at least one reactant gas comprises at least one of a nitrogen gas, a nitrogen-based gas and an ammonia gas.
Clause 16. The method of any of clauses 13-15 wherein the chemical reaction comprises carburizing.
Clause 17. The method of clause 16 wherein the at least one reactant gas comprises at least one of a carbon-based gas, an acetylene gas, a propane gas, a butane gas, a methane gas and a carbon monoxide gas.
Clause 18. The method of any of clauses 1-17 wherein each select portion of the metal article that is hardened is based on corresponding locations in a three-dimensional digital model of the metal article that are designated for hardening.
Clause 19. The method of any of clauses 1-18 wherein the at least one select portion of each layer in multiple select layers of the metal article that are hardened comprise one or more areas in which portions of consecutive layers are hardened.
Clause 20. The method of clause 19 wherein the portions of consecutive layers that are hardened comprise at least one portion with a hardened depth that ranges from at least one of about 0.0001 inches, about 0.002 inches, about 0.004 inches, about 0.006 inches, about 0.008 inches, about 0.010 inches, about 0.020 inches, about 0.030 inches and about 0.040 inches to a depth through the metal article.
Clause 21. The method of clause 19 or 20 wherein the one or more areas comprise at least one area at an interior of the metal article that does not extend to an exterior surface of the metal article.
Clause 22. The method of any of clauses 19-21 wherein the one or more areas comprise at least one area that extends from a first layer of the metal article to consecutive layers.
Clause 23. The method of any of clauses 19-22 wherein the one or more areas comprise at least one area that extends from an interior layer of the metal article to an exterior surface of the metal article such that portions of the metal article are case-hardened.
Clause 24. The method of clause 23 wherein the portions of the metal article that are case-hardened comprise at least one portion with a case-hardened depth that exceeds at least one of about 0.0001 inches, about 0.001 inches, about 0.010 inches, about 0.020 inches, about 0.030 inches and about 0.040 inches.
Clause 25. The method of any of clauses 1-24 wherein the selectively establishing of the reactive atmosphere is prior to the establishing of the non-reactive atmosphere.
Clause 26. The method of any of clauses 1-25 wherein the establishing of the non-reactive atmosphere and the selectively establishing of the reactive atmosphere are repeated during the melting of the metal material to deposit molten material in the plurality of layers until the metal article is complete.
Clause 27. The method of any of clauses 1-26, further comprising:
   receiving at least one inert gas from at least one first gas supply; and
   routing the at least one inert gas to the build chamber to establish the non-reactive atmosphere.
Clause 28. The method of clause 27, further comprising:
   opening an outlet path from the build chamber to purge gaseous content of the build chamber in conjunction with the routing of the at least one inert gas to the build chamber. Clause 29. The method of clause 28 wherein the gaseous content purged from the build chamber comprises at least one of air, one or more reactant gas and one or more inert gas.
Clause 30. The method of clause 28 or 29 wherein the outlet path from the build chamber remains open during the additive manufacturing process to enable a continuous flow of the at least one inert gas to the build chamber.
Clause 31. The method of clause 28, further comprising:
   directing the outlet path proximate to the molten material as the molten material is deposited for a present layer on a substrate or on the metal article to facilitate removal of any reactant gas present near the molten material.
Clause 32. The method of clause 28, further comprising:
   applying a vacuum to the outlet path of the build chamber to assist purging of the gaseous content of the build chamber.
Clause 33. The method of clause 32, further comprising:
   stopping the vacuum on the outlet path of the build chamber after a predetermined time based on projected completion of the purging.
Clause 34. The method of clause 28, further comprising:
   closing the outlet path from the build chamber after a predetermined time to seal the build chamber during the additive manufacturing process.
Clause 35. The method of any of clauses 1-34, the melting of the metal material comprising:
   forming a melt pool as the molten material is deposited for a present layer on a substrate or on the metal article.
Clause 36. The method of clause 35 wherein at least one parameter of the melt pool is controlled to manage the chemical reaction that hardens the at least one select portion of the multiple select layers of the metal article.
Clause 37. The method of clause 36 wherein the at least one parameter of the melt pool comprises at least one of a metal pool size, a metal pool temperature and a transition time from molten material to solidification.
Clause 38. The method of any of clauses 1-37, further comprising:
   receiving at least one inert gas from at least one first gas supply and at least one reactant gas from at least one second gas supply; and
   routing the at least one inert gas and the at least one reactant gas to the build chamber to establish the reactive atmosphere.
Clause 39. The method of clause 38, further comprising:
   directing the at least one inert gas and the at least one reactant gas to a location within the build chamber proximate to the molten material as the molten material is deposited for a present layer on a substrate or on the metal article.
Clause 40. The method of clause 38 or 39, further comprising:
   mixing the at least one inert gas from the at least one first gas supply and the at least one reactant gas from the at least one second gas supply to form a predetermined reactant gas mixture; and
   routing the predetermined reactant gas mixture to the build chamber to establish the reactive atmosphere.
Clause 41. The method of clause 40, further comprising:
   directing the predetermined reactant gas mixture to a location within the build chamber proximate to the molten material as the molten material is deposited for a present layer on a substrate or on the metal article.
Clause 42. The method of any of clauses 38-41, further comprising:
   opening an outlet path from the build chamber to purge gaseous content of the build chamber in conjunction with the routing of the at least one inert gas and the at least one reactant gas to the build chamber.
Clause 43. The method of clause 42 wherein the outlet path from the build chamber remains open during the additive manufacturing process to enable a continuous flow of the at least one inert gas and the at least one reactant gas to the build chamber.
Clause 44. The method of any of clauses 1-43, further comprising:
   receiving at least one predetermined reactant gas mixture from at least one mixed gas supply; and
   routing the at least one predetermined reactant gas mixture to the build chamber to establish the reactive atmosphere.
Clause 45. The method of clause 44, further comprising:
   directing the at least one predetermined reactant gas mixture to a location within the build chamber proximate to the molten material as the molten material is deposited for a present layer on a substrate or on the metal article.
Clause 46. The method of clause 44 or 45, further comprising:
   opening an outlet path from the build chamber to purge gaseous content of the build chamber in conjunction with the routing of the at least one predetermined reactant gas mixture to the build chamber.
Clause 47. The method of clause 46 wherein the outlet path from the build chamber remains open during the additive manufacturing process to enable a continuous flow of one or more of the at least one inert gas and the at least one predetermined reactant gas mixture to the build chamber.
Clause 48. The method of any of clauses 1-47, further comprising:
   alternating between the establishing of the non-reactive atmosphere and the selectively establishing of the reactive atmosphere during the melting of the metal material to deposit molten material that is not hardened during periods of the non-reactive atmosphere and to deposit molten material that is hardened during periods of the reactive atmosphere such that the metal article comprises first areas in which at least certain portions of consecutive layers are hardened and second areas in which at least other portions of consecutive layers are not hardened.
Clause 49. The method of clause 48 wherein the melting of the metal material to deposit molten material in the plurality of layers to build the metal article and the translational movement of the metal article and/or the energy source is paused at select locations in which there are predetermined transitions from the non-reactive atmosphere to the reactive atmosphere and vice versa.
Clause 50. The method of clause 49 wherein the select locations and the predetermined transitions are based on a three-dimensional digital model of the metal article that are designated for hardening.
Clause 51. The method of any of clauses 1-50, further comprising:
   heat treating the metal article after completion of the additive manufacturing process to optimize the hardening of the select portions of the metal article hardened during the additive manufacturing process; and
   machining the metal article to produce a finish on the metal article.
Clause 52. An additive manufacturing system for hardening select portions of a metal article, the additive manufacturing system comprising:
   a build chamber configured to provide a controlled environment for additive manufacturing of the metal article;
   a material handling assembly configured to feed a metal material inside the build chamber in conjunction with an additive manufacturing process;
   a substrate configured to at least temporarily retain the metal article during the additive manufacturing process;
   an energy source assembly configured to melt the metal material using an energy source to deposit molten material in a plurality of layers to build the metal article on the substrate;
   a translational assembly configured to provide translational movement of at least one of the substrate and the energy source assembly based on predetermined locations for deposition of the molten material in conjunction with the additive manufacturing process; and
   a system control assembly in operative communication with the material handling assembly, the energy source assembly and the translational assembly, the system control assembly configured to control establishment of a non-reactive atmosphere within the build chamber, configured to control feeding of the metal material by the material handling assembly, configured to control melting of the metal material by the energy source in conjunction with controlling the translational assembly and configured to control selective establishment of a reactive atmosphere within the build chamber to cause a chemical reaction to harden at least one select portion of each layer in multiple select layers of the plurality of layers in conjunction with the melting and subsequent solidification of the molten material.
Clause 53. The additive manufacturing system of clause 52 wherein the non-reactive atmosphere comprises at least one inert gas.
Clause 54. The additive manufacturing system of clause 53 wherein the at least one inert gas comprises at least one of argon, helium, neon and nitrogen.
Clause 55. The additive manufacturing system of any of clauses 52-54 wherein, in relation to the additive manufacturing process, the metal material comprises at least one of a metal powder and a metal wire.
Clause 56. The additive manufacturing system of any of clauses 52-55 wherein the metal material comprises at least one of titanium, a titanium alloy, a steel, a corrosion resistant steel, a precipitation hardened corrosion resistant steel, a maraging steel and a ferrous steel alloy.
Clause 57. The additive manufacturing system of any of clauses 52-56 wherein the energy source comprises one or more of at least one laser beam, at least one electron beam and at least one plasma arc.
Clause 58. The additive manufacturing system of any of clauses 52-57 wherein the system control assembly is configured to control at least one parameter of the energy source and the translational assembly to manage the chemical reaction that hardens the at least one select portion of the multiple select layers of the metal article.
Clause 59. The additive manufacturing system of clause 58 wherein the at least one parameter of the energy source and the translational assembly comprises at least one of an energy source dwell time for select predetermined locations relating to hardening for the at least one select portion of each layer in the multiple select layers of the metal article, a laser deposition dwell time associated with the energy source, a plasma arc dwell time associated with the energy source and an electron beam dwell time associated with the energy source.
Clause 60. The additive manufacturing system of any of clauses 52-59 wherein the system control assembly is configured to control the translational assembly regarding linear movement of the metal article in at least one of an X-axis, a Y-axis and a Z-axis.
Clause 61. The additive manufacturing system of clause 60 wherein the system control assembly is configured to control the translational assembly regarding rotational movement of the metal article in reference to at least one of the X-axis, the Y-axis and the Z-axis.
Clause 62. The additive manufacturing system of clause 60 or 61 wherein the system control assembly is configured to control the translational assembly regarding angular movement of the metal article in reference to at least one of the X-axis, the Y-axis and the Z-axis.
Clause 63. The additive manufacturing system of any of clauses 52-62 wherein the system control assembly is configured to store or access a three-dimensional digital model of the metal article upon which the predetermined locations for deposition of the molten material are based.
Clause 64. The additive manufacturing system of any of clauses 52-63 wherein the reactive atmosphere comprises a predetermined reactant gas mixture of at least one inert gas and at least one reactant gas.
Clause 65. The additive manufacturing system of clause 64 wherein the chemical reaction comprises nitriding.
Clause 66. The additive manufacturing system of clause 65 wherein the at least one reactant gas comprises at least one of a nitrogen gas, a nitrogen-based gas and an ammonia gas.
Clause 67. The additive manufacturing system of clause 64, 65 or 66 wherein the chemical reaction comprises carburizing.
Clause 68. The additive manufacturing system of clause 67 wherein the at least one reactant gas comprises at least one of a carbon-based gas, an acetylene gas, a propane gas, a butane gas, a methane gas and a carbon monoxide gas.
Clause 69. The additive manufacturing system of any of clauses 52-68 wherein the system control assembly is configured to store or access a three-dimensional digital model of the metal article upon which each select portion of the metal article that is hardened is based on corresponding locations that are designated for hardening.
Clause 70. The additive manufacturing system of any of clauses 52-69 wherein the at least one select portion of each layer in multiple select layers of the metal article that are hardened comprise one or more areas in which portions of consecutive layers are hardened.
Clause 71. The additive manufacturing system of clause 70 wherein the portions of consecutive layers that are hardened comprise at least one portion with a hardened depth that ranges from at least one of about 0.0001 inches, about 0.002 inches, about 0.004 inches, about 0.006 inches, about 0.008 inches, about 0.010 inches, about 0.020 inches, about 0.030 inches and about 0.040 inches to a depth through the metal article.
Clause 72. The additive manufacturing system of clause 70 or 71 wherein the one or more areas comprise at least one area at an interior of the metal article that does not extend to an exterior surface of the metal article.
Clause 73. The additive manufacturing system of clause 70, 71 or 72 wherein the one or more areas comprise at least one area that extends from a first layer of the metal article to consecutive layers.
Clause 74. The additive manufacturing system of any of clauses 70-73 wherein the one or more areas comprise at least one area that extends from an interior layer of the metal article to an exterior surface of the metal article such that portions of the metal article are case-hardened.
Clause 75. The additive manufacturing system of clause 74 wherein the portions of the metal article that are case-hardened comprise at least one portion with a case-hardened depth that exceeds at least one of about 0.0001 inches, about 0.001 inches, about 0.010 inches, about 0.020 inches, about 0.030 inches and about 0.040 inches.
Clause 76. The additive manufacturing system of any of clauses 52-75 wherein the system control assembly is configured to begin the additive manufacturing process by selectively establishing the reactive atmosphere prior to establishing the non-reactive atmosphere.
Clause 77. The additive manufacturing system of any of clauses 52-76 wherein the system control assembly is configured to repeat the establishing of the non-reactive atmosphere and the selectively establishing of the reactive atmosphere during the melting of the metal material to deposit molten material in the plurality of layers until the metal article is complete.
Clause 78. The additive manufacturing system of any of clauses 52-77, the system control assembly comprising:
   a gas manifold assembly comprising at least one inert gas inlet and at least one inert gas outlet, the at least one inert gas inlet configured to receive the at least one inert gas from the at least one first gas supply at a first inert gas inlet, the gas manifold assembly configured to channel the first inert gas inlet to a first inert gas outlet, the gas manifold assembly configured to provide the at least one inert gas to the build chamber via the first inert gas outlet to establish the non-reactive atmosphere.
Clause 79. The additive manufacturing system of clause 78, the build chamber comprising:
   an outlet port configured to open an outlet path from the build chamber to purge gaseous content of the build chamber in conjunction with the routing of the at least one inert gas to the build chamber.
Clause 80. The additive manufacturing system of clause 79, the build chamber further comprising:
   an exhaust conduit coupled to the outlet port and configured to direct the outlet path proximate to the molten material as the molten material is deposited for a present layer on the substrate or on the metal article to facilitate removal of any reactant gas present near the molten material.
Clause 81. The additive manufacturing system of clause 79 or 80 wherein the gaseous content purged from the build chamber comprises at least one of air, one or more reactant gas and one or more inert gas.
Clause 82. The additive manufacturing system of any of clauses 79-81 wherein the outlet port is configured to remain open during the additive manufacturing process such that the outlet path remains open to enable a continuous flow of the at least one inert gas to the build chamber.
Clause 83. The additive manufacturing system of any of clauses 79-82, further comprising:
   a vacuum pump coupled to the outlet port of the build chamber and configured to apply a vacuum to the outlet path to assist purging of the gaseous content of the build chamber.
Clause 84. The additive manufacturing system of clause 83 wherein the vacuum pump is configured to stop the vacuum on the outlet path of the build chamber after a predetermined time based on projected completion of the purging.
Clause 85. The additive manufacturing system of any of clauses 79-84 wherein the outlet port is configured to close the outlet path from the build chamber after a predetermined time to seal the build chamber during the additive manufacturing process.
Clause 86. The additive manufacturing system of clause 78 wherein the gas manifold assembly further comprises at least one reactant gas inlet and at least one reactant gas outlet, the at least one reactant gas inlet configured to receive the at least one reactant gas from the at least one second gas supply at a first reactive gas inlet, the gas manifold assembly configured to channel the first reactive gas inlet to a first reactive gas outlet, the gas manifold assembly configured to route the at least one reactant gas to the build chamber via the first reactant gas outlet to establish the reactive atmosphere.
Clause 87. The additive manufacturing system of clause 86, the build chamber comprising:
   at least one supply conduit coupled to the first reactant gas outlet of the manifold assembly, the at least one supply conduit configured to direct the at least one inert gas and the at least one reactant gas to a location within the build chamber proximate to the molten material as the molten material is deposited for a present layer on the substrate or on the metal article. Clause 88. The additive manufacturing system of clause 86 or 87, the build chamber comprising:
   an outlet port configured to open an outlet path from the build chamber to purge gaseous content of the build chamber in conjunction with the routing of the at least one inert gas and the at least one reactant gas to the build chamber.
Clause 89. The additive manufacturing system of clause 88 wherein the outlet port is configured to remain open during the additive manufacturing process such that the outlet path remains open to enable a continuous flow of the at least one inert gas and the at least one reactant gas to the build chamber.
Clause 90. The additive manufacturing system of clause 86 wherein the gas manifold assembly further comprises at least one reactant gas inlet and at least one reactant gas mix outlet, the at least one inert gas inlet configured to receive the at least one inert gas at a second inert gas inlet, the at least one reactant gas inlet configured to receive the at least one reactant gas at a second reactant gas inlet, the gas manifold assembly configured to mix the at least one inert gas received at the second inert gas inlet and the at least one reactant gas received at the second reactant gas inlet to form a predetermined reactant gas mixture, the gas manifold assembly configured to channel the predetermined reactant gas mixture to a first reactant gas mix outlet, the gas manifold assembly configured to route the predetermined reactant gas mixture to the build chamber via the first reactant gas mix outlet to establish the reactive atmosphere.
Clause 91. The additive manufacturing system of clause 90, the build chamber comprising:
   at least one supply conduit coupled to the first reactant gas mix outlet of the manifold assembly, the at least one supply conduit configured to direct the predetermined reactant gas mixture to a location within the build chamber proximate to the molten material as the molten material is deposited for a present layer on the substrate or on the metal article.
Clause 92. The additive manufacturing system of clause 90 or 91, the building chamber comprising:
   an outlet port configured to open an outlet path from the build chamber to purge gaseous content of the build chamber in conjunction with the routing of the at least one inert gas and the at least one reactant gas to the build chamber.
Clause 93. The additive manufacturing system of clause 92 wherein the outlet port is configured to remain open during the additive manufacturing process such that the outlet path remains open to enable a continuous flow of the at least one inert gas and the at least one reactant gas to the build chamber.
Clause 94. The additive manufacturing system of clause 78 wherein the gas manifold assembly further comprises at least one reactant gas mix inlet and at least one reactant gas mix outlet, the at least one reactant gas mix inlet configured to receive a predetermined reactant gas mixture at a first reactant gas mix inlet, the gas manifold assembly configured to channel the predetermined reactant gas mixture to a second reactant gas mix outlet, the gas manifold assembly configured to route the predetermined reactant gas mixture to the build chamber via the second reactant gas mix outlet to establish the reactive atmosphere.
Clause 95. The additive manufacturing system of clause 94, the build chamber comprising:
   at least one supply conduit coupled to the second reactant gas mix outlet of the manifold assembly, the at least one supply conduit configured to direct the at least one predetermined reactant gas mixture to a location within the build chamber proximate to the molten material as the molten material is deposited for a present layer on the substrate or on the metal article.
Clause 96. The additive manufacturing system of clause 94 or 95, the build chamber comprising:
   an outlet port configured to open an outlet path from the build chamber to purge gaseous content of the build chamber in conjunction with the routing of the at least one predetermined reactant gas mixture to the build chamber.
Clause 97. The additive manufacturing system of clause 96 wherein the outlet port is configured to remain open during the additive manufacturing process such that the outlet path remains open to enable a continuous flow of one or more of the at least one inert gas and the at least one predetermined reactant gas mixture to the build chamber.
Clause 98. The additive manufacturing system of Claim 52 wherein the energy source is configured to form a melt pool in conjunction with the melting of the metal material as the molten material is deposited for a present layer on the substrate or on the metal article.
Clause 99. The additive manufacturing system of clause 98 wherein the system control assembly is configured to control at least one parameter of the melt pool to manage the chemical reaction that hardens the at least one select portion of the multiple select layers of the metal article.
Clause 100. The additive manufacturing system of clause 99 wherein the at least one parameter of the melt pool comprises at least one of a metal pool size, a metal pool temperature and a transition time from molten material to solidification.
Clause 101. The additive manufacturing system of any of clauses 52-100, wherein the system control assembly is configured to alternate between the establishing of the non-reactive atmosphere and the establishing of the reactive atmosphere during the melting of the metal material to deposit molten material that is not hardened during periods of the non-reactive atmosphere and to deposit molten material that is hardened during periods of the reactive atmosphere such that the metal article comprises first areas in which at least certain portions of consecutive layers are hardened and second areas in which at least other portions of consecutive layers are not hardened.
Clause 102. The additive manufacturing system of clause 101 wherein the system control assembly is configured to pause the melting of the metal material to deposit molten material in the plurality of layers to build the metal article and the translational movement provided by the translational assembly at select locations in which there are predetermined transitions from the non-reactive atmosphere to the reactive atmosphere and vice versa.
Clause 103. The additive manufacturing system of clause 102 wherein the system control assembly is configured to store or access a three-dimensional digital model of the metal article upon which the select locations and the predetermined transitions are based on corresponding locations that are designated for hardening.
Clause 104. A metal article, comprising:
   a plurality of layers of a metal material deposited via an additive manufacturing process, at least one select portion of each layer in multiple select layers of the plurality of layers being hardened via a chemical reaction caused by a reactive atmosphere selectively established during select periods of the additive manufacturing process, and
   wherein remaining portions of the multiple select layers and remaining layers of the plurality of layers were deposited in remaining periods of the additive manufacturing process in which a non-reactive atmosphere was established.
Clause 105. The metal article of clause 104 wherein the non-reactive atmosphere comprises at least one inert gas.
Clause 106. The metal article of clause 104 or 105 wherein, in relation to the additive manufacturing process, the metal material comprises at least one of a metal powder and a metal wire.
Clause 107. The metal article of any of clauses 104-106 wherein the metal material comprises at least one of titanium, a titanium alloy, a steel, a corrosion resistant steel, a precipitation hardened corrosion resistant steel, a maraging steel and a ferrous steel alloy.
Clause 108. The metal article of any of clauses 104-107 wherein the reactive atmosphere comprises a predetermined reactant gas mixture of at least one inert gas and at least one reactant gas.
Clause 109. The metal article of clause 108 wherein the at least one inert gas comprises at least one of argon, helium, neon and nitrogen.
Clause 110. The metal article of clause 108 or 109 wherein the chemical reaction comprises nitriding.
Clause 111. The metal article of clause 110 wherein the at least one reactant gas comprises at least one of a nitrogen gas, a nitrogen-based gas and an ammonia gas.
Clause 112. The metal article of clause 108 wherein the chemical reaction comprises carburizing.
Clause 113. The metal article of clause 112 wherein the at least one reactant gas comprises at least one of a carbon-based gas, an acetylene gas, a propane gas, a butane gas, a methane gas and a carbon monoxide gas.
Clause 114. The metal article of any of clauses 104-113 wherein each select portion of the metal article that is hardened is based on corresponding locations in a three-dimensional digital model of the metal article that are designated for hardening.
Clause 115. The metal article of any of clauses 104-114 wherein the plurality of layers for the metal article are arranged in alternating groups of the multiple select layers with hardening and multiple remaining layers without hardening.
Clause 116. The metal article of clause 115 wherein the at least one select portion of each layer in the multiple select layers with hardening is greater than other portions of corresponding layer without hardening.
Clause 117. The metal article of clause 115 or 116 wherein the at least one select portion of each layer in the multiple select layers with hardening comprises the corresponding layer and no portion of the corresponding layer is without hardening.
Clause 118. The metal article of any of clauses 104-117 wherein the at least one select portion of each layer in multiple select layers of the metal article that are hardened comprise one or more areas in which portions of consecutive layers are hardened.
Clause 119. The metal article of clause 118 wherein the portions of consecutive layers that are hardened comprise at least one portion with a hardened depth that ranges from at least one of about 0.0001 inches, about 0.002 inches, about 0.004 inches, about 0.006 inches, about 0.008 inches, about 0.010 inches, about 0.020 inches, about 0.030 inches and about 0.040 inches to a depth through the metal article.
Clause 120. The metal article of clause 118 or 119 wherein the one or more areas comprise at least one area at an interior of the metal article that does not extend to an exterior surface of the metal article.
Clause 121. The metal article of any of clauses 118-120 wherein the one or more areas comprise at least one area that extends from a first layer of the metal article to consecutive layers.
Clause 122. The metal article of any of clauses 118-121 wherein the one or more areas comprise at least one area that extends from an interior layer of the metal article to an exterior surface of the metal article such that portions of the metal article are case-hardened.
Clause 123. The metal article of clause 122 wherein the portions of the metal article that are case-hardened comprise at least one portion with a case-hardened depth that exceeds at least one of about 0.0001 inches, about 0.001 inches, about 0.010 inches, about 0.020 inches, about 0.030 inches and about 0.040 inches.
Clause 124. The metal article of any of clauses 104-123 wherein, in conjunction the additive manufacturing process, establishing the non-reactive atmosphere and selectively establishing the reactive atmosphere are repeated which results in certain portions of the metal article built during periods of the reactive atmosphere to be hardened and other portions built during periods of the non-reactive atmosphere to not be hardened such that the metal article comprises first areas in which at least certain portions of consecutive layers are hardened and second areas in which at least other portions of consecutive layers are not hardened.

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods for hardening select portions of metal articles 100, 300, 400, 600, 700, 800, 900, 1000, 1100, additive manufacturing systems for hardening select portions of metal articles 1200 and metal articles 200 have been shown and described, modifications may occur to those skilled in the art upon reading the specification. The present application includes such modifications and is limited only by the scope of the claims.

## Claims

1. A method (100) for hardening select portions of a metal article (200), the method (100) comprising:
establishing (102) a non-reactive atmosphere (1228) within a build chamber (1202) of an additive manufacturing system (1200);
melting (104) a metal material (1208) using an energy source (1216) to deposit molten material in a plurality of layers (202) to build the metal article (200) in conjunction with controlling translational movement of at least one of the metal article (200) and the energy source (1216) based on predetermined locations for deposition of the molten material; and
selectively establishing (106) a reactive atmosphere (1230) within the build chamber (1202) that causes a chemical reaction to harden at least one select portion (204) of each layer in multiple select layers (206) of the plurality of layers (202) in conjunction with the melting (104) and subsequent solidification of the molten material.

2. The method of Claim 1 wherein the non-reactive atmosphere (1228) comprises at least one inert gas (1220), wherein the at least one inert gas (1220) preferably comprises at least one of argon, helium, neon and nitrogen.

3. The method of any of Claims 1 to 2 wherein, in relation to the additive manufacturing process, the metal material (1208) comprises at least one of a metal powder and a metal wire.

4. The method of any of Claims 1 to 3 wherein the metal material (1208) comprises at least one of titanium, a titanium alloy, a steel, a corrosion resistant steel, a precipitation hardened corrosion resistant steel, a maraging steel and a ferrous steel alloy.

5. The method of any of Claims 1 to 4 wherein the energy source (1216) comprises one or more of at least one laser beam, at least one electron beam and at least one plasma arc.

6. The method of any of Claims 1 to 5 wherein at least one parameter of the translational movement of the metal article (200), the translation movement of the energy source (1216) and operation of the energy source (1216) is controlled to manage the chemical reaction that hardens the at least one select portion (204) of the multiple select layers (206) of the metal article (200), wherein preferably the at least one parameter of the energy source (1216) and the translational movement of the metal article (200) and/or the energy source (1216) comprises at least one of an energy source dwell time for select predetermined locations relating to hardening for the at least one select portion (204) of each layer in the multiple select layers (206) of the metal article (200), a laser deposition dwell time associated with the energy source (1216), a plasma arc dwell time associated with the energy source (1216) and an electron beam dwell time associated with the energy source (1216).

7. The method of any of Claims 1 to 6 wherein the translational movement of the metal article (200) and/or the energy source (1216) comprises control of linear movement in at least one of an X-axis, a Y-axis and a Z-axis, wherein the translational movement of the metal article (200) and/or the energy source (1216) preferably comprises control of rotational movement in reference to at least one of the X-axis, the Y-axis and the Z-axis, and/or wherein the translational movement of the metal article (200) and/or the energy source (1216) preferably comprises control of angular movement in reference to at least one of the X-axis, the Y-axis and the Z-axis.

8. The method of any of Claims 1 to 7 wherein the predetermined locations for deposition of the molten material are based on a three-dimensional digital model (1232) of the metal article (200).

9. The method of any of Claims 1 to 8 wherein the reactive atmosphere (1230) comprises a predetermined reactant gas mixture (1227) of at least one inert gas (1220) and at least one reactant gas (1224), wherein the chemical reaction preferably comprises nitriding, and wherein the at least one reactant gas (1224) preferably comprises at least one of a nitrogen gas, a nitrogen-based gas and an ammonia gas.

10. An additive manufacturing system (1200) for hardening select portions of a metal article (200), the additive manufacturing system comprising:
a build chamber (1202) configured to provide a controlled environment (1204) for additive manufacturing of the metal article (200);
a material handling assembly (1206) configured to feed a metal material (1208) inside the build chamber (1202) in conjunction with an additive manufacturing process;
a substrate (1212) configured to at least temporarily retain the metal article (200) during the additive manufacturing process;
an energy source assembly (1214) configured to melt the metal material (1208) using an energy source (1216) to deposit molten material in a plurality of layers (202) to build the metal article (200) on the substrate (1212);
a translational assembly (1210) configured to provide translational movement of at least one of the substrate (1212) and the energy source assembly (1214) based on predetermined locations for deposition of the molten material in conjunction with the additive manufacturing process; and
a system control assembly (1218) in operative communication with the material handling assembly (1206), the energy source assembly (1214) and the translational assembly (1210), the system control assembly (1218) configured to control establishment of a non-reactive atmosphere (1228) within the build chamber (1202), configured to control feeding of the metal material (1208) by the material handling assembly (1206), configured to control melting (104) of the metal material (1208) by the energy source (1216) in conjunction with controlling the translational assembly (1210) and configured to control selective establishment of a reactive atmosphere (1230) within the build chamber (1202) to cause a chemical reaction to harden at least one select portion (204) of each layer in multiple select layers (206) of the plurality of layers (202) in conjunction with the melting (104) and subsequent solidification of the molten material.

11. The additive manufacturing system of Claim 10 wherein the non-reactive atmosphere (1228) comprises at least one inert gas (1220), and wherein the at least one inert gas (1220) preferably comprises at least one of argon, helium, neon and nitrogen.

12. The additive manufacturing system of Claim 10 or 11 wherein, in relation to the additive manufacturing process, the metal material (1208) comprises at least one of a metal powder and a metal wire.

13. The additive manufacturing system of any of Claims 10-12 wherein the energy source (1216) comprises one or more of at least one laser beam, at least one electron beam and at least one plasma arc.

14. The additive manufacturing system of any of Claims 10-13 wherein the system control assembly (1218) is configured to control at least one parameter of the energy source (1216) and the translational assembly (1210) to manage the chemical reaction that hardens the at least one select portion (204) of the multiple select layers (206) of the metal article (200), and wherein the at least one parameter of the energy source (1216) and the translational assembly (1210) preferably comprises at least one of an energy source dwell time for select predetermined locations relating to hardening for the at least one select portion (204) of each layer in the multiple select layers (206) of the metal article (200), a laser deposition dwell time associated with the energy source (1216), a plasma arc dwell time associated with the energy source (1216) and an electron beam dwell time associated with the energy source (1216).

15. A metal article, comprising:
a plurality of layers (202) of a metal material (1208) deposited via an additive manufacturing process, at least one select portion (204) of each layer in multiple select layers (206) of the plurality of layers (202) being hardened via a chemical reaction caused by a reactive atmosphere (1230) selectively established during select periods of the additive manufacturing process, and
wherein remaining portions (208) of the multiple select layers (206) and remaining layers (210) of the plurality of layers (202) were deposited in remaining periods of the additive manufacturing process in which a non-reactive atmosphere (1228) was established.
